# EUROPEAN PATENT APPLICATION

(11) **EP 4 538 842 A1**
(43) Date of publication of application: **16.04.2025**
(21) Application number: 23852719.6
(22) Date of filing: 19.06.2023
(51) Int. Cl.: G06F 3/04845, G06F 3/04842, G06F 3/0481, G06F 3/0485, G06F 3/041

(54) **ELECTRONIC DEVICE FOR DISPLAYING SCREEN IN DISPLAY AREA OF DEFORMABLE DISPLAY, AND METHOD THEREFOR**

(30) Priority: 08.08.2022 KR 20220098880; 07.09.2022 KR 20220113813
(71) Applicant: Samsung Electronics Co., Ltd., Suwon-si, Gyeonggi-do 16677 (KR)
(72) Inventor: KIM, Hyeryoung, Suwon-si, Gyeonggi-do 16677 (KR); LEE, Hyungmin, Suwon-si, Gyeonggi-do 16677 (KR); KIM, Joseph, Suwon-si, Gyeonggi-do 16677 (KR); JUNG, Hanchul, Suwon-si, Gyeonggi-do 16677 (KR)
(74) Representative: Gulde & Partner
(86) International application number: PCT/KR2023/008482
(87) International publication number: WO 2024/034832

(57) **Abstract**

An electronic device according to an embodiment may comprise: a first housing; a second housing which can move relative to the first housing; a display including a display area that expands or contracts according to the movement of the second housing; and a processor. While displaying a first portion of content in the display area, the processor can identify an expansion of the display area exposed to the outside of the first housing. On the basis of identifying the expansion of the display area, the processor can identify attributes of the content displayed through the display area. On the basis of the attributes, the processor can display a second portion connected to the first portion in the content along with the first portion in the expanded display area.

## Description

### [Technical Field]

The following descriptions relate to an electronic device for displaying a screen in a display area of a deformable display, and a method therefor.

### [Background Art]

An electronic device having a deformable form factor is being developed using a flexible display. For example, an electronic device including a plurality of foldable housings may provide a user experience based on a shape of the electronic device to a user using a flexible display disposed across the plurality of housings. For example, based on a shape of the flexible display that is folded or unfolded by the user's external force, the electronic device may change a content displayed on the flexible display. For example, an electronic device that winds or unfolds a flexible display is being developed.

### [Disclosure]

### [Technical Solution]

According to an embodiment, an electronic device may comprise a first housing, a second housing movable with respect to the first housing, a display including a display area that is extended or retracted according to the movement of the second housing, and a processor. The processor may be configured to identify, while displaying a first portion of a content within the display area, that a size of the display area exposed outside the first housing is extended. The processor may be configured to identify, based on identifying that the size of the display area is extended, an attribute of the content displayed through the display area. The processor may be configured to display, based on the attribute, together with the first portion of the content, a second portion connected to the first portion within the content in the display area having the extended size.

A method of an electronic device according to an embodiment may comprise identifying, while displaying a first portion of a content in a display area, that a size of the display area exposed outside a first housing is extended. The method of the electronic device may comprise, based on identifying that the size of the display area is extended, identifying an attribute of the content displayed through the display area. The method of the electronic device may comprise displaying, based on the attribute, together with the first portion of the content, a second portion connected to the first portion within the content, in the display area having the extended size.

### [Description of the Drawings]

FIG. 1 illustrates an example of a block diagram of an electronic device according to an embodiment.
FIGS. 2A to 2B illustrate an example of an operation in which an electronic device according to an embodiment is deformed between states in different forms.
FIG. 3A illustrates an example of a screen according to a change in a display area of an electronic device according to an embodiment.
FIG. 3B illustrates an example of a screen according to a change in a display area of an electronic device according to an embodiment.
FIG. 3C illustrates an example of a screen according to a change in a display area of an electronic device according to an embodiment.
FIG. 3D illustrates an example of a screen according to a change in a display area of an electronic device according to an embodiment.
FIG. 4A illustrates an example of a screen according to a change in a display area of an electronic device according to an embodiment.
FIG. 4B illustrates an example of a screen according to a change in a display area of an electronic device according to an embodiment.
FIG. 5 illustrates an example of a screen according to a change in a display area of an electronic device according to an embodiment.
FIG. 6 illustrates an example of a screen according to a change in a display area of an electronic device according to an embodiment.
FIG. 7 illustrates an example of a screen according to a change in a display area of an electronic device according to an embodiment.
FIGS. 8A to 8B illustrate an example of a screen according to a change in a display area of an electronic device according to an embodiment.
FIG. 9 illustrates an example of a flowchart with respect to an operation of an electronic device according to an embodiment.
FIG. 10 illustrates an example of a flowchart with respect to an operation of an electronic device according to an embodiment.
FIGS. 11A to 11B illustrate an example of a flowchart with respect to an operation of an electronic device according to an embodiment.
FIG. 12A illustrates an example of a top plan view of an electronic device according to an embodiment in a first state.
FIG. 12B illustrates an example of a bottom view of an electronic device according to an embodiment in a first state.
FIG. 12C illustrates an example of a top plan view of an electronic device according to an embodiment in a second state.
FIG. 12D illustrates an example of a bottom view of an electronic device according to an embodiment in a second state.
FIGS. 13A and 13B illustrate an example of an exploded perspective view of an electronic device according to an embodiment.
FIG. 14A illustrates an example of a cross-sectional view of an electronic device according to an embodiment in a first state.
FIG. 14B illustrates an example of a cross-sectional view of an electronic device according to an embodiment in a second state.

### [Mode for Invention]

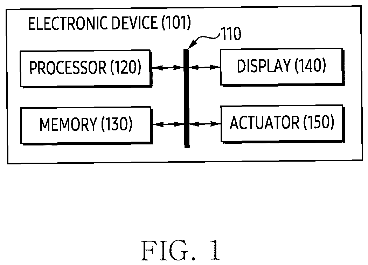

FIG. 1 illustrates an example of a block diagram of an electronic device according to an embodiment.

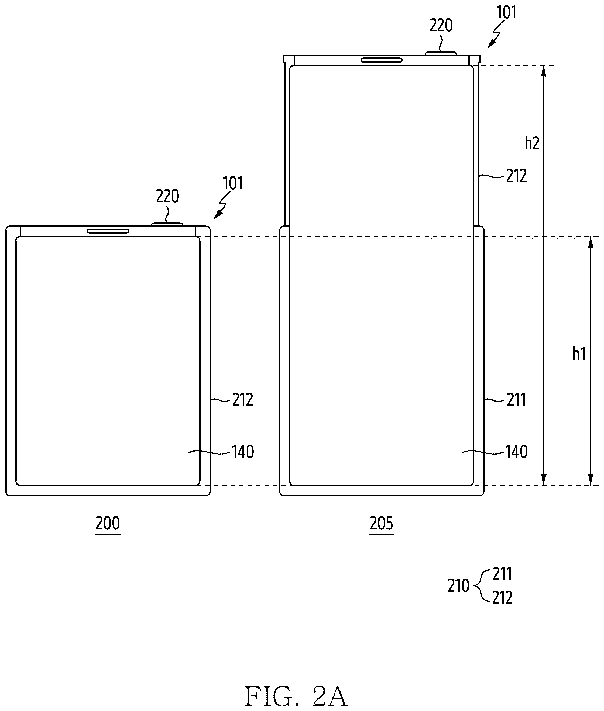

Referring to FIG. 1, an electronic device 101 according to an embodiment may include at least one of a processor 120, a memory 130, a display 140, and an actuator 150. The processor 120, the memory 130, the display 140, and the actuator 150 may be electronically and/or operably coupled with each other by an electronical component, such as a communication bus 110. Although illustrated based on different blocks, the embodiment is not limited thereto. A type and/or the number of hardware components included in the electronic device 101 are not limited as illustrated in FIG. 1. For example, the electronic device 101 may include only a portion of the hardware components illustrated in FIG. 1. Although not illustrated, the electronic device 101 may further include a housing forming an exterior of the electronic device 101. The exterior of the electronic device 101 formed by the housing will be described later with reference to FIGS. 2A to 2B.

The processor 120 of the electronic device 101 according to an embodiment may include a hardware component for processing data based on one or more instructions. The hardware component for processing data may include, for example, an arithmetic and logic unit (ALU), a floating point unit (FPU), a field programmable gate array (FPGA), an application processor (AP), and/or a central processing unit (CPU). The number of the processors 120 may be one or more. For example, the processor 120 may have a structure of a multi-core processor, such as a dual core, a quad core, or a hexa core.

The memory 130 of the electronic device 101 according to an embodiment may include a hardware component for storing data and/or instructions inputted to and/or outputted to the processor 120. The memory 130 may include, for example, volatile memory such as random-access memory (RAM), and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include at least one of, for example, programmable ROM (PROM), erasable PROM (EPROM), electrically erasable PROM (EEPROM), flash memory, a hard disk, a compact disk, and an embedded multi media card (eMMC).

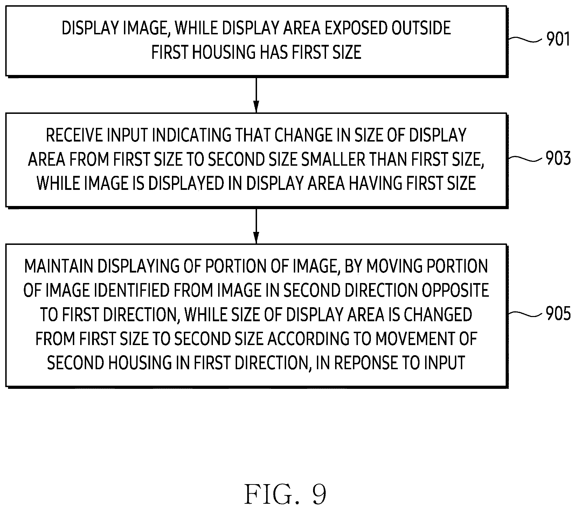

One or more instructions indicating a calculation and/or an operation to be performed by the processor 120 on data may be stored in the memory 130. A set of the one or more instructions may be referred to as a firmware, an operating system, a process, a routine, a subroutine, and/or an application. For example, the electronic device 101 and/or the processor 120 may perform at least one of operations of FIGS. 9 to 11B when a set of a plurality of instructions distributed in a form of the operating system, the firmware, a driver, and/or the application is executed.

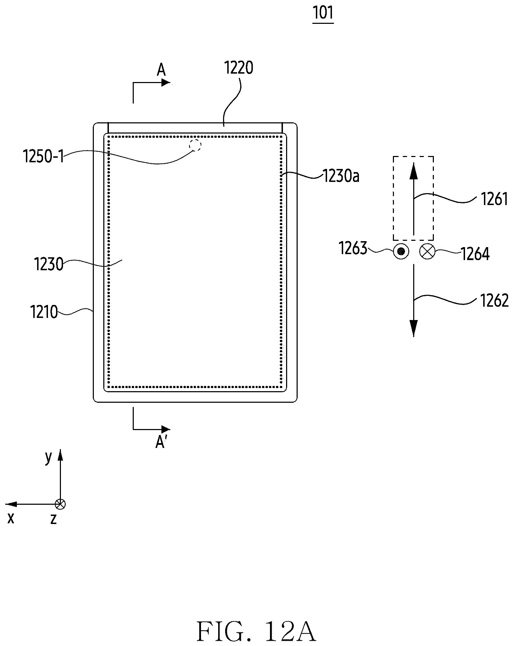

The display 140 of the electronic device 101 according to an embodiment may output visualized information to the user. The display 140 according to an embodiment may be a flexible display capable of being deformed by an external force applied to the display 140. The display 140 may include a liquid crystal display (LCD), a plasma display panel (PDP), one or more light emitting diodes (LEDs), and/or one or more organic light emitting diodes (OLEDs). An exemplary structure of the electronic device 101 for deforming a shape of the display 140 will be described later with reference to FIGS. 12A to 14B.

The display 140 according to an embodiment may include a sensor (e.g., a touch sensor panel (TSP)) for detecting an external object (e.g., the user's finger) on the display 140. For example, based on the TSP, the electronic device 101 may detect an external object contacting on the display 140 or floating on the display 140. In response to detecting the external object, the electronic device 101 may execute a function related to a specific visual object corresponding to a portion in the display 140 to which the external object is contacted, among visual objects displayed in the display 140.

The actuator 150 of the electronic device 101 according to an embodiment may change the shape of the display 140 and/or the electronic device 101. The actuator 150 may be referred to as a driving unit. The actuator 150 may include hardware (e.g., motor) for outputting kinetic energy from electrical energy. In an embodiment in which the actuator 150 includes a motor, the actuator 150 may include a gear (e.g., rack gear) for changing rotational motion of the motor into linear motion (or translation motion) applied to the display 140. The actuator 150 according to an embodiment may include a plurality of gears engaged to each other, in order to adjust a rotational force (e.g., torque) of the motor. The plurality of gears may be referred to as a gear assembly or a transmission unit of the actuator 150.

According to an embodiment, the processor 120 may adjust a speed and/or a direction at which the display 140 and/or the electronic device 101 is deformed by changing a frequency, voltage, and/or a current of a power signal applied to the motor of the actuator 150. Exemplary operations in which the electronic device 101 according to an embodiment adjusts the shape of the display 140 by controlling the actuator 150 will be described later with reference to FIGS. 2A to 2B.

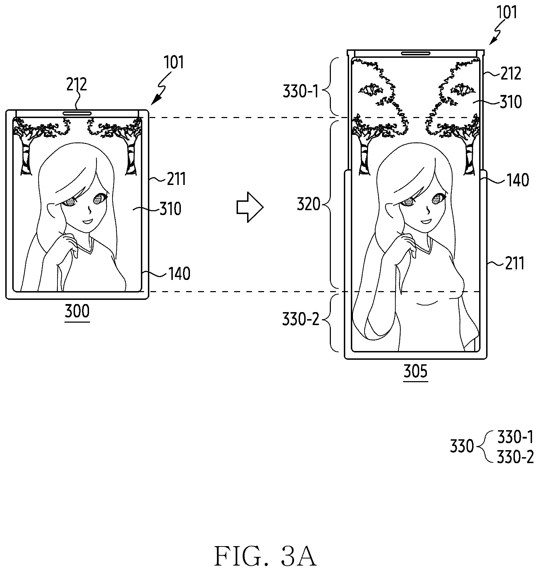

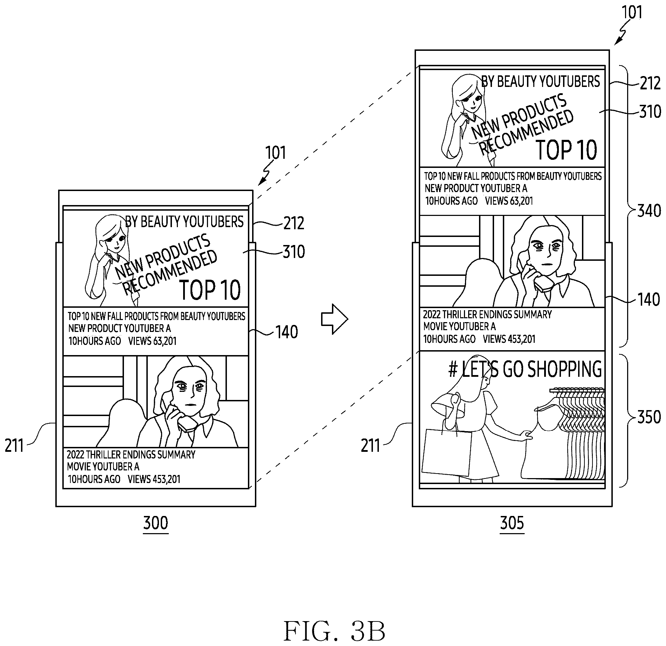

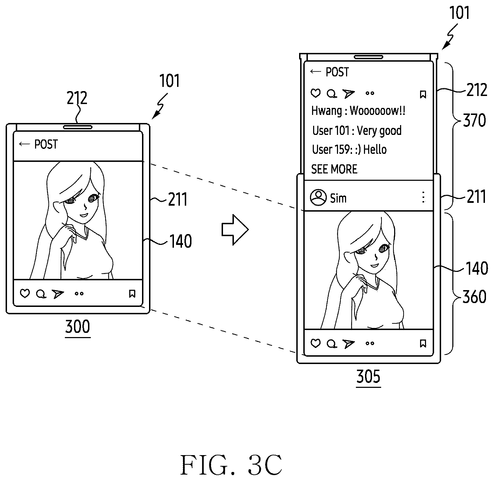

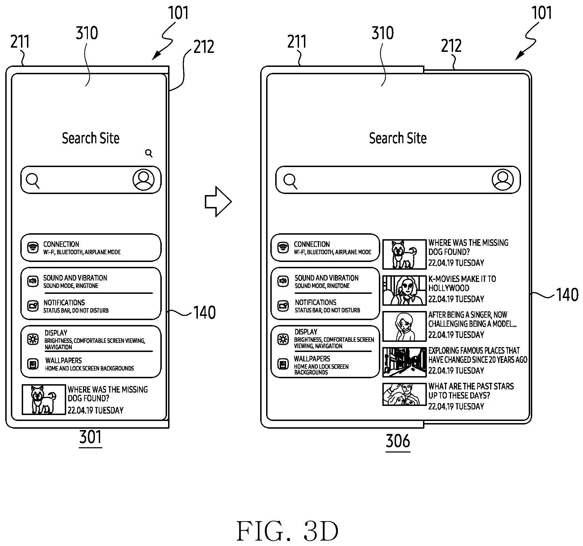

The electronic device 101 according to an embodiment may display a screen in a display area formed on the display 140. The electronic device 101 may display at least one of an image such as a photo, a lock screen, a home screen, a wallpaper, or a visual object in the screen. For example, the above image may have a format based on a joint photographic experts group (JPEG), and/or moving picture experts group (MPEG). The lock screen, the home screen, and/or the wallpaper may be displayed based on execution of an application. The electronic device 101 according to an embodiment may selectively display a portion of the image, the rock screen, the home screen, the wallpaper, and/or the visual object based on a width, a height, a size, and/or extent of the display area related to the shape of the display 140, which is adjusted by the actuator 150. An operation in which the electronic device 101 according to an embodiment selectively displays the portion of the image, the lock screen, the home screen, the wallpaper, and/or the visual object will be described later with reference to FIGS. 3, 4, 5, 6, 7, and/or 8A to 8B.

The electronic device 101 according to an embodiment may move the image, the lock screen, the home screen, and/or the wallpaper, based on enlargement or reduction of the display area based on deformation of the display 140. For example, while the display 140 is at least partially inserted into a housing of the electronic device 101, the size of the display area may be reduced based on the insertion of the display 140.

The electronic device 101 according to an embodiment may display an image while the display area exposed outside a first housing has a first size. For example, the first size may include a size in which the display area is maximally expanded. The electronic device 101 may receive an input indicating a change in size of the display area from the first size to a second size smaller than the second size, while the image is displayed in the display area having the first size. The input may include an input with respect to a button exposed outside the electronic device 101. In response to the input, the electronic device 101 may change the size of the display area from the first size to the second size according to a movement of the second housing in a first direction. For example, the first direction may be a direction in which the second housing is inserted into the first housing. For example, the second size may include a size in which the display area is minimally reduced. The electronic device 101 according to an embodiment may move a portion of the image identified from the image in a second direction opposite to the first direction while the display area is changed from the first size to the second size. For example, the portion of the image may be a portion including a subject. For example, the second direction may be a direction in which the second housing is extracted from the first housing. The electronic device 101 according to an embodiment may maintain the display of the portion of the image by moving the portion of the image in the second direction. For example, the electronic device 101 may display the portion of the image in the screen, by moving the portion of the image in the second direction. For example, since the portion of the image including the subject is maintained in the screen, the electronic device 101 may maintain the display of the subject independently of the enlargement or the reduction of the display area.

As described above, the electronic device 101 according to an embodiment may enhance a user experience of the user of the electronic device 101 by moving the portion of the image identified from the image and displaying it in the screen.

The electronic device 101 according to an embodiment may perform a different operation, based on a user interface (UI) of the display 140 when receiving an input indicating that the display 140 is deformed. The input indicating deformation of the display 140 may include an input indicating the change in size of the display area.

The electronic device 101 according to an embodiment may perform a different operation based on a layout of the screen displayed in the display 140. For example, the electronic device 101 may move a single image in a display area adjusted by the deformation of the display 140 based on a subject in the single image, based on identifying the single image that occupies an entire display area of the display 140, such as the lock screen and/or the home screen. For example, the electronic device 101 may identify, in the display area of the display 140, at least one of a plurality of visual objects, based on identifying the plurality of visual objects displayed in a scrollable area by the user's gesture, such as a scroll view. The electronic device 101 may maintain the display of the at least one of the plurality of visual objects while the display area is reduced based on identifying the at least one of the plurality of visual objects. The electronic device 101 according to an embodiment may identify a visual object included in a scroll view area, based on including the scroll view area in a layout of the screen displayed in the display 140. The electronic device 101 may maintain the display of the visual object in the screen based on identifying the visual object.

The electronic device 101 according to an embodiment may identify a subject included in the image. The electronic device 101 according to an embodiment may identify at least one subject in the image based on at least one feature point included in the image. Hereinafter, the subject may include a foreground object from among a background object or the foreground object, distinguished in an arrangement between objects in the image such as a photo. The electronic device 101 may recognize the subject in the image based on predetermined categories to distinguish the foreground object, such as a person, an animal, and/or a doll. Recognizing the subject by the electronic device 101 may include an operation of selecting a category matched to the foreground object in the image among the predetermined categories. However, it is not limited thereto. The electronic device 101 according to an embodiment may determine that the subject is included in a specific category corresponding to a face based on identifying an eye, a nose, a mouth, and/or an ear included in the subject. For example, the electronic device 101 may identify the subject, based on information obtained based on hardware (e.g., neural processing unit (NPU) and/or graphic processing unit (GPU)) to perform a calculation related to an artificial intelligence, software to provide a function related to the artificial intelligence, and/or an external electronic device (e.g., a server providing the function related to the artificial intelligence). For example, the information may include a probability that the subject in the image may be matched to a specified category (e.g., animal, plant, natural object, and/or object). For example, the information may include a sub-category in which the category is subdivided. For example, the sub-category may include information such as 'person', 'puppy', and/or 'cat'. For example, the electronic device 101 may store whether the subject is included in the image, or a result of recognizing the subject included in the image in metadata corresponding to the image. The electronic device 101 may obtain information identifying the subject in the image from the metadata. The electronic device 101 may identify an area in which the subject is captured in the image based on the information.

The electronic device 101 according to an embodiment may receive an input indicating the change to the second size different from the first size of the display area while the display area exposed outside the first housing has the first size. The input may include a gesture of pressing a button exposed outside of the housing of the electronic device 101. A description of changing of the size will be described later in FIGS. 2A to 2B. The electronic device 101 may change the size of the display area by using the actuator 150 based on the received input. For example, the electronic device 101 may move the second housing by using the actuator 150. The electronic device 101 may adjust the display area of the display 140 exposed outside the first housing based on the movement of the second housing.

The electronic device 101 according to an embodiment may display a first screen including at least one image in the display area of the display 140. For example, the first screen may be a screen including a single image. For example, the first screen may be a screen including at least one image provided through an application (e.g., a gallery application). For example, the first screen may be a screen including at least one image provided through an application related to a social network service (SNS). For example, the first screen provided through the application related to the SNS may include a scroll view area. The electronic device 101 may receive the input while displaying the first screen including the at least one image. The electronic device 101 may move the at least one image based on receiving the input through the first screen including the at least one image. For example, the electronic device 101 may move the at least one image based on a position of the at least one image in the display area while the size of the display area is changed by the actuator 150. For example, the electronic device 101 may maintain the display of the at least one image in the screen by moving the at least one image.

The electronic device 101 according to an embodiment may display a second screen different from the first screen. The second screen may not include the at least one image in the screen. The electronic device 101 may receive an input indicating the change of the display area while displaying the second screen. The electronic device 101 may change the size of the display area by the actuator 150 based on receiving the input. While changing the size of the display area by the actuator 150, the electronic device 101 may display a third screen overlappingly on the second screen based on the first size. The third screen may be obtained from an application corresponding to the second screen. The third screen may correspond to the second size having a size different from the first size.

The electronic device 101 according to an embodiment may display content in the display area. For example, the content may include content composed solely of text such as a document, content including both text and an image, content composed solely of an image, content including a single image and/or a video, and/or a web page including at least one container. For example, the electronic device 101 may identify an attribute of the content based on a configuration of the content. However, it is not limited thereto.

The electronic device 101 according to an embodiment may display a first portion of the content in the display area. For example, the first portion may be at least a portion of the content. For example, the electronic device 101 may identify that the size of the display area exposed outside the first housing is extended while displaying the first portion. The electronic device 101 may identify the attribute of the content displayed through the display area based on identifying that the size of the display area is extended. The attribute of the content may be classified by the electronic device 101 based on the at least a portion of the content displayed in the display area.

For example, in case that the content includes a single image or a video, the attribute of the content may be classified as a first attribute by the electronic device 101. For example, in case that the content includes text among an image, a video, or the text (e.g., a document such as a text file), the attribute of the content may be classified as a second attribute by the electronic device 101. For example, in case that the content includes a scroll view provided by a web page and/or an application related to multimedia, the attribute of the content may be classified as a third attribute by the electronic device 101. For example, in a case of including a user interface (UI) having a different layout for each size of the display area, the attribute of the content may be classified as a fourth attribute by the electronic device 101. A description of the attribute of the content will be described later in FIGS. 3A to 3D.

The electronic device 101 according to an embodiment may display a second portion connected to the first portion in the content together with the first portion of the content in the display area having the extended size, based on the attribute of the content. For example, the electronic device 101 may display the second portion by adjusting a position of the first portion, based on identifying the attribute of the content displaying the first portion. For example, the electronic device 101 may display the second portion by fastening the position of the first portion, based on identifying the attribute of the content displaying the first portion. A description of the operation of displaying the first portion and the second portion will be described later in FIGS. 3A to 3D.

Hereinafter, an operation in which the electronic device 101 according to an embodiment adjusts the width, the height, the size, and/or the extent of the display area will be described with reference to FIGS. 2A to 2B.

FIGS. 2A to 2B illustrate an example of an operation in which an electronic device according to an embodiment is deformed between states in different forms. An electronic device 101 of FIGS. 2A to 2B may be an example of the electronic device 101 of FIG. 1. For example, the electronic device 101 and the display 140 of FIG. 1 may include the electronic device 101 and a display 140 of FIGS. 2A to 2B.

Referring to FIGS. 2A to 2B, the electronic device 101 may be a terminal owned by a user. For example, the terminal may include a personal computer (PC) such as a laptop and a desktop, a smartphone, a smartpad, a tablet personal computer (PC), a smartwatch, and a smart accessory such as a head-mounted device (HMD). A housing 210 of the electronic device 101 according to an embodiment may include an inner space in which one or more hardware components (e.g., the one or more hardware described above with reference to FIG. 1) included in the electronic device 101 are disposed. The housing 210 may form an external shape of the electronic device 101.

According to an embodiment, the electronic device 101 may have a deformable form factor. The electronic device 101 being deformed may mean that at least one of dimensions such as a width, a height, and/or thickness of the electronic device 101 is changed. The at least one of the dimensions may be passively changed by an external force applied to the electronic device 101, and/or may be actively changed by one or more actuators (e.g., the actuator 150 of FIG. 1) included in the electronic device 101.

In order to support deformability of the electronic device 101, the housing 210 may be divided into a first housing 211 and a second housing 212 that are interconnected. The electronic device 101 according to an embodiment may change a shape of the display 140 and/or the electronic device 101 by adjusting a positional relationship between the first housing 211 and the second housing 212 using an actuator (e.g., the actuator 150 of FIG. 1). Referring to FIGS. 2A to 2B, the display 140 of the electronic device 101 may be disposed across a surface of the first housing 211 and a surface of the second housing 212. A surface, in which the display 140 is disposed, formed by the first housing 211 and the second housing 212 may be referred to as a front surface. Changing the shape of the display 140 by the electronic device 101 according to an embodiment may include an operation of changing at least one of a width, a height, and/or extent of at least a portion of the display 140 exposed to the outside.

Referring to FIGS. 2A to 2B, an embodiment in which the first housing 211 is slidably coupled with respect to the second housing 212 is illustrated. However, the embodiment is not limited thereto. The display 140 may be insertable into the first housing 211, or extractable from the first housing 211 based on deformation of the electronic device 101. In case that the display 140 is inserted into the first housing 211, a size of an area in which the display 140 is exposed to the outside may be reduced. In case that the display 140 is extracted from the first housing 211, the size of the area in which the display 140 is exposed to the outside may increase. Hereinafter, a display area of the display 140 may mean an area formed by pixels disposed on the area in which the display 140 is exposed to the outside among the pixels included in the display 140. For example, the display area may be referred to as an active area of the display 140. According to an embodiment, the electronic device 101 may adjust the display area by inserting the display 140 into the housing 210 or extracting the display 140 from the housing 210 using the actuator.

Referring to FIGS. 2A to 2B, different states 200 and 205 of the electronic device 101 and/or the display 140 are illustrated. According to an embodiment, the electronic device 101 may switch between the states 200 and 205 using the actuator. The states 200 and 205 of the electronic device 101 according to an embodiment may be distinguished according to the dimensions (e.g., the width, the height, the thickness, and/or an aspect ratio) of the electronic device 101 and/or the display 140. The states 200 and 205 may be distinguished according to a distance between the first housing 211 and the second housing 212 of the electronic device 101. For example, the distance between the first housing 211 and the second housing 212 may be a distance between a surface (e.g., a lower surface of the first housing 211) of the first housing 211 and another surface (e.g., an upper surface of the second housing 212) of the second housing 212 that is parallel to the surface of the first housing 211 and spaced apart from the surface of the first housing 211.

Each of the states 200 and 205 of FIGS. 2A to 2B may be a state in which a surface extent of the electronic device 101 and/or the extent of the display area of the display 140 are minimized or maximized as the electronic device 101 is deformed. Hereinafter, a state in which the surface extent of the electronic device 101 and/or the extend of the display area are minimized, such as the state 200, may be referred to as a slide-in state, a rolled state, a closed state, a roll-in state, and/or a contracted state. Hereinafter, a state in which the surface extent of the electronic device 101 and/or the extent of the display area are maximized, such as the state 205, may be referred to as a slide-out state, an unrolled state, an opened state, a roll-out state, and/or an extended state. A state of the electronic device 101 according to an embodiment may further include another state between the state 200 in which the extent of the display area is minimized and the state 205 in which the extent of the display area is maximized. The other state may be referred to as an intermediate state, a sub-rolled state, and/or a sub-opened state.

Referring to FIGS. 2A to 2B, the display 140 included in the electronic device 101 according to an embodiment may have a rectangular shape. Corners of the display 140 according to an embodiment may have a rounded corner shape. Hereinafter, among sides that are boundaries of the display 140, which is a rectangular, a relatively longer side in a height direction which is parallel to the relatively longer side may be referred to as the height. Hereinafter, among the sides that are the boundaries of the display 140, which is a rectangular, a relatively shorter side in a width direction which is parallel to the relatively shorter side may be referred to as the width.

Referring to FIG. 2A, an embodiment in which the electronic device 101 deforms the shape of the electronic device 101 along the height direction from among the width direction or the height direction of the display 140 will be illustrated. A height h1 in the state 200 of FIG. 2A may be a minimum value of the height of the display area in a time point (e.g., the slide-in state) when extent of a portion of the display 140 exposed to the outside is minimized. For example, a ratio of the height and the width in the state 200 may be 4.5:3 with respect to the width of the display area. A height h2 of the display 140 in the state 205 of FIG. 2A may be a maximum value of the height of the display area in a time point (e.g., the slide-out state) when the extent of the portion of the display 140 exposed to the outside is maximized. For example, a ratio of the height and the width in the state 205 may be 21:9 with respect to the width of the display area. The height h2 may be the maximum value of the height of the deformable display 140. Although not illustrated, a state of the electronic device 101 may include not only the states 200 and 205, but also an intermediate state in which the ratio of the height and the width is 16:9.

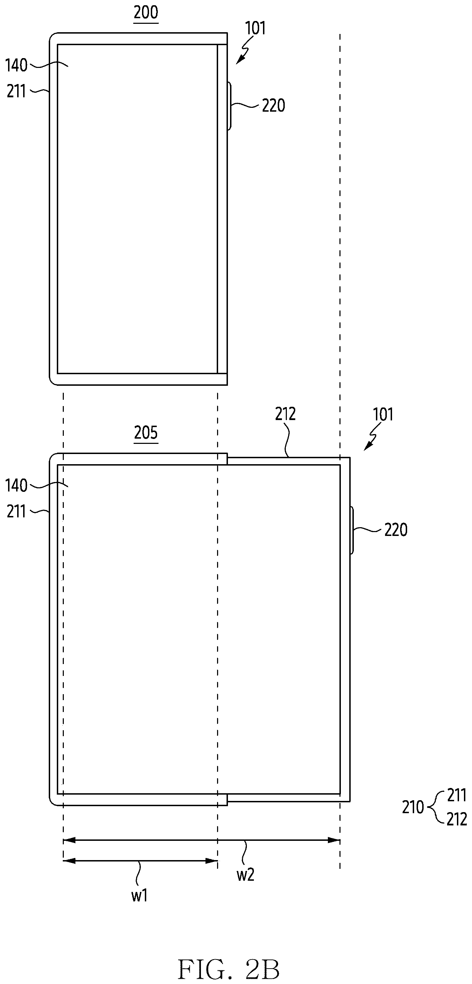

Referring to FIG. 2B, an embodiment in which the electronic device 101 deforms the shape of the electronic device 101 along the width direction from among the width direction or the height direction is illustrated. Each of a width w1 in the state 200 and a width w2 in the state 205 of FIG. 2B may be a minimum value and a maximum value of the width of the deformable display 140. As the height and/or the width of the display 140 is adjusted, the electronic device 101 may change an aspect ratio of the display 140 to an aspect ratio suitable for content outputted from the electronic device 101. For example, the aspect ratio may be selected from 4.5:3, 16:9, and 21:9.

The electronic device 101 according to an embodiment may identify a state corresponding to a current shape of the electronic device 101, from among the states 200 and 205 and an intermediate state between the states 200 and 205, using one or more sensors (e.g., a hall sensor). In an embodiment in which the electronic device 101 includes the hall sensor, a magnet included in the hall sensor may be disposed in the second housing 212, and one or more magnetic sensors included in the hall sensor may be disposed in the first housing 211. In the embodiment, a size of a magnetic field that is identified by each of the one or more magnetic sensors and generated by the magnet may be changed according to a positional relationship between the first housing 211 and the second housing 212. In the embodiment, the electronic device 101 may identify the shape of the electronic device 101 based on the size of the magnetic field identified by the one or more magnetic sensors. Identifying the shape by the electronic device 101 may be performed based on an operating system and/or a firmware that are executing in a processor (e.g., the processor 120 of FIG. 1) of the electronic device 101.

The electronic device 101 according to an embodiment may activate the actuator (e.g., the actuator 150 of FIG. 1) to change the shape of the display 140 and/or the electronic device 101 in between the states 200 and 205. A designated event in the electronic device 101 according to an embodiment may include an operating system and a firmware that are executing in the electronic device 101, and/or a software interrupt (SWI) generated from an application. The software interrupt may be generated by an application for reproducing multimedia content (e.g., video) having a specific aspect ratio. The software interrupt may be generated based on a position of the electronic device 101 identified by the one or more sensors. The software interrupt may be generated based on a condition (e.g., a condition indicated by time, a place, an occasion, or a combination thereof) inputted by the electronic device 101 and/or the user.

A designated event for changing the shape of the display 140 and/or the electronic device 101 according to an embodiment may be generated based on a gesture of the user. For example, the designated event may be generated by a gesture performed on the display 140. The gesture may include at least one of a pinch-to-zoom gesture, a swipe gesture, a drag gesture, or a gesture of tapping a designated visual object (e.g., an icon in which the aspect ratio is displayed) displayed on the display 140. For example, the gesture may be generated by a gesture of pressing a button 220 exposed to the outside from a portion of the housing 210 of the electronic device 101.

The electronic device 101 according to an embodiment may include the button 220 for receiving an input for changing the shape of the display 140 and/or the electronic device 101. Referring to FIGS. 2A to 2B, the button 220 exposed to the outside from at least a portion of the housing 210 of the electronic device 101 is illustrated. In response to identifying the gesture of pressing the button 220, the electronic device 101 may identify the input by the user. In an embodiment in which the button 220 is mapped to a plurality of functions (e.g., a power management function and/or a fingerprint recognition function), the electronic device 101 may identify the input, based on a pressure to press the button 220, duration in which an external object (e.g., the user's fingertip) is in contact with the button 220, and/or duration in which the button 220 is pressed. For example, a first gesture of pressing the button 220 by exceeding designated duration (e.g., 5 seconds) may be matched to an input of turning on or off the electronic device 101. In the above example, a second gesture of pressing the button 220 shorter than the designated duration may be matched to the input for changing the shape.

Referring to an embodiment of FIG. 2A, the button 220 may be exposed to the outside through the upper surface of the second housing 212. Referring to FIG. 2B, the button 220 may be exposed to the outside through a side surface of the second housing 212. A position of the button 220 is not limited to examples of FIG. 2A and/or FIG. 2B.

The designated event for changing the shape of the display 140 and/or the electronic device 101 according to an embodiment may be generated based on the electronic device 101 receiving a voice signal including a designated word and/or sentence. Although not illustrated, the electronic device 101 may obtain the voice signal using one or more microphones. The designated event may be generated in response to the electronic device 101 receiving a wireless signal from an external electronic device (e.g., a remote controller, and/or a pointing device such as a digitizer, wirelessly, which are connected to the electronic device 101). The wireless signal may be transmitted from the external electronic device to the electronic device 101 based on the user's gesture identified through the external electronic device. The gesture identified by the external electronic device may include, for example, at least one of a movement along a designated trajectory of the external electronic device and/or a gesture of pressing a button of the external electronic device. The trajectory may be referred to as a path.

The electronic device 101 according to an embodiment may control the actuator based on the current shape of the electronic device 101 identified from among the states 200 and 205 and the intermediate state between the states 200 and 205 in response to the designated event for changing the shape of the display 140 and/or the electronic device 101. Based on the control of the actuator, the dimension such as the width and/or the height, and/or the extent, of the display area may be adjusted. Referring to FIGS. 2A to 2B, the extent of the display area may be minimized in the roll-in state such as the state 200, and the extent of the display area may be maximized in the roll-out state such as the state 205. The electronic device 101 according to an embodiment may identify a change in the display area while displaying content (e.g., an image) in the display area formed on the display 140. As the dimension and/or the extent of the display area is changed, the electronic device 101 may identify and move at least a portion in the content. The electronic device 101 may enhance a user experience of the electronic device 101 by moving at least a portion of the content and displaying the at least a portion of the content in the screen.

As described above, the electronic device 101 according to an embodiment may identify enlargement or reduction of the display area, by the deformation of the electronic device 101 and/or the display 140 in the states 200 and 205. In response to identifying the reduction of the display area, the electronic device 101 may maintain the display of the at least a portion of the content. The electronic device 101 may enhance the user experience of the electronic device 101 by maintaining the display of the at least a portion of the content.

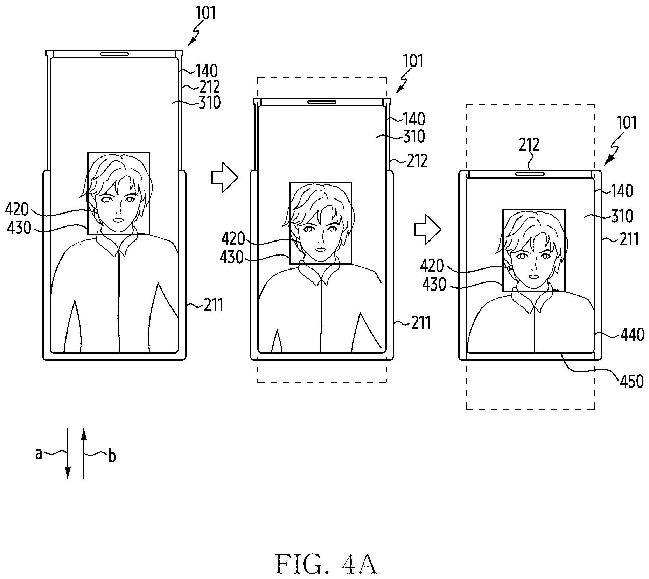

Hereinafter, an operation of moving an image displayed according to a change in the display area of the electronic device 101 according to an embodiment will be described with reference to FIG. 4A.

FIG. 3A illustrates an example of a screen according to a change in a display area of an electronic device according to an embodiment. FIG. 3B illustrates an example of a screen according to a change in a display area of an electronic device according to an embodiment. FIG. 3C illustrates an example of a screen according to a change in a display area of an electronic device according to an embodiment. FIG. 3D illustrates an example of a screen according to a change in a display area of an electronic device according to an embodiment. An electronic device 101 of FIG. 3A, FIG. 3B, FIG. 3C, and/or FIG. 3D may be an example of the electronic device 101 of FIG. 1, FIG. 2A, and/or FIG. 2B. A display 140 of FIG. 3A, FIG. 3B, FIG. 3C, and/or FIG. 3D may be an example of the display 140 of FIG. 1, FIG. 2A, and/or FIG. 2B. Operations of FIG. 3A, FIG. 3B, FIG. 3C, and/or FIG. 3D may be executed by the processor 120 of FIG. 1.

Referring to FIGS. 3A to 3D, the electronic device 101 according to an embodiment may include a first housing 211, and a second housing 212 that is movable with respect to the first housing 211. The electronic device 101 may display a screen through the display 140 exposed outside the first housing 211. The electronic device 101 may include the display 140 including a display area that is extended or retracted according to a movement of the second housing 212. The electronic device 101 may adjust a size of the display area displayed through the display 140 based on the movement of the second housing 212.

The electronic device 101 according to an embodiment may display a screen 310 in the display area of the display 140. The electronic device 101 may display content in the display area. The electronic device 101 may identify an attribute of the content while displaying the content. For example, the electronic device 101 may identify the attribute of the content based on at least a portion of the content. For example, the electronic device 101 may identify the attribute of the content based on the at least a portion of the content displayed in the screen 310.

For example, in case that the content includes a single image or video, the attribute of the content may be classified as a first attribute by the electronic device 101. For example, in case that the content includes text among an image, a video, or the text (e.g., a document such as a text file), the attribute of the content may be classified as a second attribute by the electronic device 101. For example, in case of including a scroll view such as a web page and/or an application related to multimedia, the attribute of the content may be classified as a third attribute by the electronic device 101. For example, the content classified as the third attribute may include at least one container. For example, the at least one container may be a group of an image and/or text repeatedly displayed in the scroll view. For example, in a case of including a user interface (UI) having a different layout for each size of the display area, the attribute of the content may be classified as a fourth attribute by the electronic device 101. The attribute of the content is not limited by the above description.

Referring to FIG. 3A, the electronic device 101 according to an embodiment may display a single image or video in the display area based on the content of the exemplified first attribute. For example, the electronic device 101 may identify the attribute of the content in a slide-in state 300 in which the second housing 212 is inserted into the first housing 211, such as the state 300. For example, the electronic device 101 may identify that the content displayed in the screen 310 corresponds to the first attribute, in the state 300. For example, the electronic device 101 may display a center point of the image and/or video by matching to a center point of the display area, in the state 300. For example, the electronic device 101 may display a first portion 320 of the image and/or video in the display area. The electronic device 101 may identify that the size of the display area is extended while displaying the first portion 320.

The electronic device 101 according to an embodiment may identify a change to a state 305 while displaying the center point of the image and/or video by matching to the center point of the display area, in the state 300. For example, the state 305 may include a slide-out state in which the second housing 212 is extracted from the first housing 211. For example, the electronic device 101 may display the center point of the content by matching to the center point of the display area while changing from the state 300 to the state 305. For example, the electronic device 101 may display a second portion 330, which is connected to the first portion 320, with the first portion 320 of the content, based on the change to the state 305. For example, the second portion 330 may include a sub-area connected to a first edge of the first portion 320 such as a first sub-area 330-1, and a sub- area connected to a second edge of the first portion 320 such as a second sub- area 330-2.

The electronic device 101 according to an embodiment may identify at least one visual object (e.g., a person) in the content of the first attribute. The electronic device 101 may display a center point of the at least one visual object by matching to the center point of the display area based on the identification of the at least one visual object.

The electronic device 101 according to an embodiment may identify a state different from a state in which at least one image is identified while displaying the content in the display area. For example, the state different from the state in which the at least one image is identified may include a state in which only text is displayed in the display area. For example, content that displays only text in the display area may be classified as content of the second attribute by the electronic device 101. The electronic device 101 may identify that the size of the display area is extended based on the content of the second attribute. While the size of the display area is extended, the electronic device 101 may move and display the content, or may display a portion of the content that is not displayed in the display area. For example, when an edge (e.g., the start point or the end point of the content) of the content is matched to the display area, the electronic device 101 may display the portion of the content that is not displayed in the display area. Displaying the screen 310 based on the content of the second attribute may be substantially the same as an operation of FIGS. 3B and/or 3C to be described later.

Referring to FIGS. 3B and 3C, the electronic device 101 according to an embodiment may display the screen 310 including a scroll view in the display area, based on content of the third attribute. For example, the content of the third attribute may include content including the scroll view provided by a web page and/or an application related to multimedia that are included in the content. The electronic device 101 may display at least one container included in the content in the screen 310, based on the content of the third attribute. For example, in the state 300, the electronic device 101 may identify that the content displayed in the screen 310 corresponds to the third attribute. In the state of identifying the content corresponding to the third attribute, the electronic device 101 may move the content in the display area. In the state of identifying the content corresponding to the third attribute, the electronic device 101 may display a first portion 340 or 360 and a second portion 350 or 370, by fastening the content in the display area.

For example, the scroll view may include at least one container. For example, the at least one container may be at least a portion of the content included in the scroll view. For example, the at least one container may be referred to as an area for distinguishing visual objects included in the scroll view. For example, the electronic device 101 may receive an input for at least a portion of the at least one container. The electronic device 101 may perform an operation of matching to the input, based on receiving the input for the at least a portion of the at least one container.

Referring to FIG. 3B, the electronic device 101 according to an embodiment may display a third portion 340 that is at least a portion of the content in the display area based on the content of the third attribute. For example, while displaying the third portion 340, the electronic device 101 may identify that the size of the display area is extended. Based on the extension of the size of the display area, the electronic device 101 may display a fourth portion 350 connected to the third portion 340 of the content. For example, the electronic device 101 may maintain a position of the third portion 340 in the display area including a container included in the content. For example, the electronic device 101 may display the fourth portion 350 connected to the third portion 340 together with the third portion 340 in a state in which an edge of the third portion 340 is positioned in an edge of the first housing 211.

For example, the electronic device 101 may identify that the size of the display area is extended based on the second housing 212 moving. The electronic device 101 may move the content in a direction matching a direction in which the second housing 212 moves while the second housing 212 moves. The electronic device 101 may display the fourth portion 350 of the content together with the third portion 340, by moving in the direction matching the direction in which the second housing 212 moves.

Referring to FIG. 3C, the electronic device 101 according to an embodiment may display a fifth portion 360 that is at least a portion of the content of the third attribute in the screen 310. The electronic device 101 may identify that the size of the display area is extended while displaying the fifth portion 360. Based on the extension of the size of the display area, the electronic device 101 may display a sixth portion 370 connected to the fifth portion 360 of the content. For example, the electronic device 101 may display the sixth portion 370 different from the fifth portion 360 in a state in which a position of the fifth portion 360 in the display area is fastened.

Referring to FIG. 3D, the electronic device 101 according to an embodiment may identify a state 301 (e.g., the slide-in state) in which the size of the display area has the minimum size. The electronic device 101 may identify an attribute of content displayed in the screen 310 in the state 301. The electronic device 101 may identify the screen 310 displayed based on the content. For example, in the state 301, the electronic device 101 may display the content of the fourth attribute in the screen 310. The content of the fourth attribute may include a user interface having a different layout for each size of the display area.

For example, the electronic device 101 may identify that the size of the display area is extended in the state 301 of displaying the screen 310 in the user interface that is a first user interface. The electronic device 101 may identify a state 306 (e.g., the slide-out state) in which the extension of the size of the display area is completed. The electronic device 101 may display the screen 310 based on a second user interface different from the first user interface, based on the completion of the extension of the display area. The second user interface may include information different from the first user interface.

The electronic device 101 according to an embodiment may change a screen displaying the first user interface to a screen displaying the second user interface. The electronic device 101 may change the screen 310 by adjusting an alpha value of the screen 310 while changing the screen displaying the first user interface into the screen displaying the second user interface. The alpha value may mean transparency of the screen 310. For example, the larger the alpha value, the clearer the screen 310 may be displayed. For example, when changing the user interface by adjusting the alpha value, the electronic device 101 may perform an operation such as fade-in and/or fade-out.

As described above, the electronic device 101 according to an embodiment may identify an attribute of content. When the display area is extended, the electronic device 101 may move the content displayed in the display area or maintain the display of the content, based on the attribute of the content. The electronic device 101 may display the content in a different method when the display area is changed according to the attribute of the content. For example, the content displayed in the different method may include content that provides a plurality of user interfaces. The electronic device 101 may enhance a user experience of the electronic device 101 by selecting a displaying method differently according to the attribute of the content.

FIG. 4A illustrates an example of a screen according to a change in a display area of an electronic device according to an embodiment. An electronic device 101 of FIG. 4A may be an example of the electronic device 101 of FIG. 1, FIG. 2A, FIG. 2B, FIG. 3A, FIG. 3B, FIG. 3C, and/or FIG. 3D. A display 140 of FIG. 4A may be an example of the display 140 of FIG. 1, FIG. 2A, FIG. 2B, FIG. 3A, FIG. 3B, FIG. 3C, and/or FIG. 3D.

Referring to FIG. 4A, the electronic device 101 according to an embodiment may include a first housing 211 and a second housing 212. The second housing 212 may be movable with respect to the first housing 211. The electronic device 101 may include a display area exposed outside the first housing 211. The electronic device 101 may include a display area having a first size in a slide-out state in which the second housing 212 is extracted. For example, the first size may be the maximum size of the display area. The electronic device 101 may display an image while the display area has the first size. The electronic device 101 may receive an input indicating a change in the size of the display area from the first size to a second size while the image is displayed in the display area having the first size. The second size may include the size of the display area in a slide-in state. The second size may be the minimum size of the display area. The input may include at least one of a pinch-to-zoom gesture, a swipe gesture, a drag gesture, or a gesture of tapping a designated visual object (e.g., an icon in which an aspect ratio is displayed) displayed on the display 140. For example, the input may include a gesture of pressing a button (e.g., the button 220 of FIG. 2) exposed to the outside from a portion of a housing 210 of the electronic device 101.

The electronic device 101 according to an embodiment may identify an object included in content of a first attribute, based on the identification of the content of the first attribute. For example, the electronic device 101 may identify the content of the first attribute, including a single image or video in the display area. The electronic device 101 may identify an object 420 while displaying an image. The object 420 may be referred to as a subject. The electronic device 101 according to an embodiment may obtain information in which the subject is identified in an image from metadata. The electronic device 101 may identify an area in which the subject is captured in the image based on the information. The electronic device 101 according to an embodiment may receive the input in a state of identifying the object 420. The electronic device 101 according to an embodiment may move the second housing 212 in response to the input. For example, the electronic device 101 may move the second housing 212 in a first direction a in response to the input. While the second housing 212 moves in the first direction a, the electronic device 101 may move the image. For example, the electronic device 101 may move the image in a second direction b. For example, the second direction b may be opposite to the first direction a. The electronic device 101 may display the object 420 included in the image in the screen 310 by moving the image in the second direction b. For example, the electronic device 101 may identify a portion 430 of the image, including the object 420. The electronic device 101 may maintain the display of the portion 430 of the image, including the object 420, by moving the image in the second direction b.

The electronic device 101 according to an embodiment may identify that a change in the size from the first size to the second size is completed. For example, the electronic device 101 may display the portion 430 of the image in which the movement in the second direction b is stopped in response to the completion of the change in the size. The electronic device 101 may display the portion 430 of the image in a predetermined partial area in the display area having the second size. For example, the predetermined partial area in the display area having the second size may include a center point of a first edge 440 from among the first edge 440 and a second edge 450 shorter than the first edge 440 of the display area. For example, the first edge 440 may be matched to a relatively longer side among sides that are boundaries of the display 140. For example, the second edge 450 may be matched to a relatively shorter side among the sides that are boundaries of the display 140.

As described above, the electronic device 101 according to an embodiment may move the image displayed in the screen 310 of the display 140 while a state of the electronic device 101 is changed from the slide-out state to the slide-in state. The electronic device 101 may move the image in a state of detecting the object 420 included in the image. The electronic device 101 may enhance a user experience of the electronic device 101 by moving the image and maintaining the display of the object 420 in the screen 310.

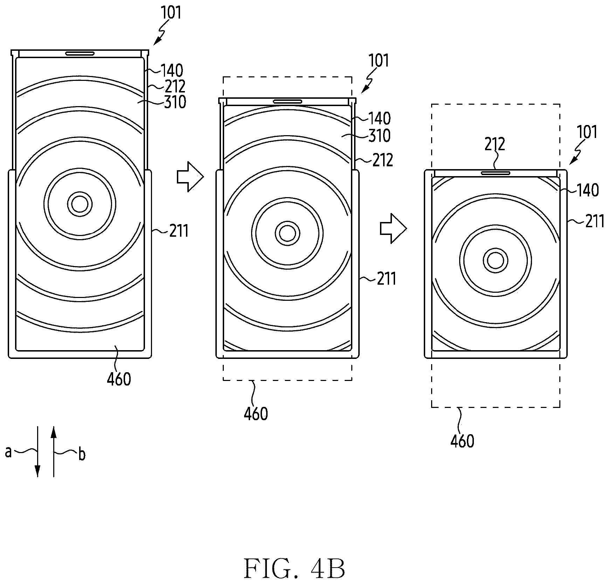

FIG. 4B illustrates an example of a screen according to a change in a display area of an electronic device according to an embodiment. An electronic device 101 of FIG. 4B may be an example of the electronic device 101 of FIG. 1, FIG. 2A, FIG. 2B, FIG. 3A, FIG. 3B, FIG. 3C, FIG. 3D, and/or FIG. 4A. A display 140 of FIG. 4B may be an example of the display 140 of FIG. 1, FIG. 2A, FIG. 2B, FIG. 3A, FIG. 3B, FIG. 3C, FIG. 3D, and/or FIG. 4A.

Referring to FIG. 4B, the electronic device 101 according to an embodiment may identify content of a first attribute, including a single image and/or video, in a display area. The electronic device 101 may identify an image 460 displayed in a screen 310 of the display 140. The electronic device 101 may identify a state (e.g., a state in which an object is not identified) different from a state in which an object (e.g., the object 420 of FIG. 4A) is identified in the image 460 displayed in the screen 310. The electronic device 101 according to an embodiment may receive an input for changing a size of the display area in a state (e.g., a state in which a subject is not identified) different from the state in which a portion of an image where the subject is captured is identified. The electronic device 101 according to an embodiment may change the display area from a first size (e.g., the maximum size of the display area) to a second size (e.g., the minimum size of the display area) in response to the input. The display area may be changed based on a movement of a second housing 212 from the first size to the second size. For example, the electronic device 101 may reduce the display area by moving the second housing 212 based on the input. For example, the display area may be reduced based on the movement of the second housing 212 in a first direction a.

The electronic device 101 according to an embodiment may move the image while the size of the display area is changed from the first size to the second size according to the movement of the second housing 212. For example, the electronic device 101 may move a center point of a first edge, from among the first edge and a second edge shorter than the first edge of the image, to a predetermined partial area of the display area. The predetermined partial area may be an area including a center point of a relatively longer side of the screen 310 displayed on the display 140.

As described above, the electronic device 101 according to an embodiment may move the image in the state in which the subject is not captured in the identified image. The electronic device 101 may move the image and display the image in the screen 310 of the display 140. For example, while the display area is reduced as the second housing 212 moves in the first direction a, the electronic device 101 may move the image in a second direction b and display the image in the screen 310. The electronic device 101 may position a center of the image in the predetermined partial area of the display area by moving the image in the second direction b. The center of the image may include an intersection point between a straight line perpendicular to a center of the first edge of the image and a straight line perpendicular to a center of the second edge of the image. The electronic device 101 may enhance a user experience of the electronic device 101 by displaying the image in the predetermined partial area of the display area.

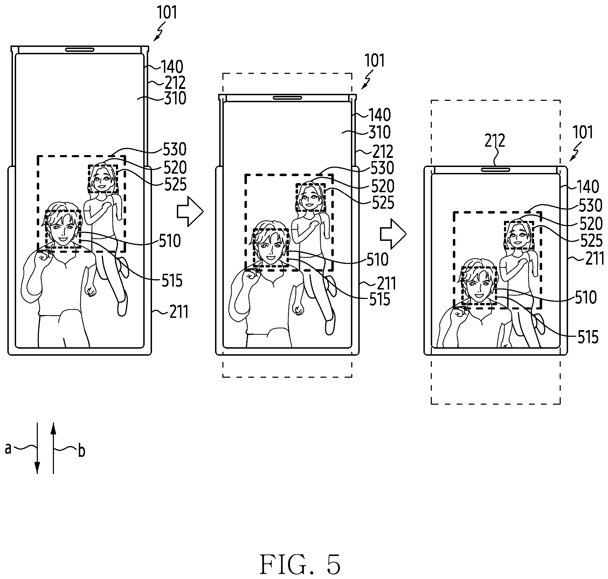

FIG. 5 illustrates an example of a screen according to a change in a display area of an electronic device according to an embodiment. An electronic device 101 of FIG. 5 may be an example of the electronic device 101 of FIG. 1, FIG. 2A, FIG. 2B, FIG. 3A, FIG. 3B, FIG. 3C, FIG. 3D, FIG. 4A, and/or FIG. 4B. A display 140 of FIG. 5 may be an example of the display 140 of FIG. 1, FIG. 2A, FIG. 2B, FIG. 3A, FIG. 3B, FIG. 3C, FIG. 3D, FIG. 4A, and/or FIG. 4B.

Referring to FIG. 5, the electronic device 101 according to an embodiment may display an image in a screen 310 of the display 140. The electronic device 101 may identify an attribute of content displayed in the screen 310. The electronic device 101 may identify that the attribute of the content is a first attribute (e.g., the attribute of the content displaying a single image, and/or video in the display area). The electronic device 101 may identify a plurality of objects 510 and 520 in the content, based on the identification of the content of the first attribute. The electronic device 101 may identify the plurality of objects 510 and 520 in the image. The plurality of objects 510 and 520 may be referred to as subjects. The electronic device 101 may identify a plurality of areas 515 and 525 including the plurality of objects 510 and 520 in a state in which the plurality of objects 510 and 520 are identified. The plurality of objects 510 and 520 may include a first object 510 and a second object 520. The first object 510 may be different from the second object 520. A first area 515 including the first object 510 may be different from a second area 525 including the second object 520. For example, the first area 515 may include the first object 510. For example, the second area 525 may include the second object 520. The electronic device 101 according to an embodiment may designate an area 530 including the plurality of areas 515 and 525. Although not illustrated in the drawing, the number of the plurality of objects is not limited. The electronic device 101 according to an embodiment may obtain information identifying a subject in an image from metadata. The electronic device 101 may identify an area in which the subject is captured in an image based on the information.

The electronic device 101 according to an embodiment may obtain information indicating the area 530. The information may include parameters indicating at least one of coordinates (e.g., x coordinate, and y coordinate) of a corner of the area 530, and a width or a height of the area 530. For example, in order to obtain the information indicating the area 530, the electronic device 101 may obtain parameters including at least one of coordinates of a corner of the first area 515, and a width or a height of the first area 515, and parameters including at least one of coordinates of a corner of the second area 525, and a width or a height of the second area 525. For example, the electronic device 101 may obtain a first parameter including a coordinate of a lower left corner of the first area 515, and the width and the height of the first area 515. The electronic device 101 may obtain a second parameter including a coordinate of a lower left corner of the second area 525, and the width and the height of the second area 525. The electronic device 101 may obtain a third parameter for designating the area 530 based on the first parameter and the second parameter. The electronic device 101 may identify the area 530 based on the third parameter.

The electronic device 101 according to an embodiment may receive an input for changing a size of the display area while displaying the plurality of objects 510 and 520 included in the image. For example, the electronic device 101 may move a second housing 212 in response to receiving the input for changing the size of the display area. For example, while the display area has a first size (e.g., the maximum size of the display area), the electronic device 101 may change the display area to a second size (e.g., the minimum size of the display area) in response to the input. The electronic device 101 may display the area 530 in the screen 310 while the size of the display area is changed. For example, the electronic device 101 may maintain the display of the area 530 by moving the image in a second direction b while the size of the display area is changed based on a movement of the second housing 212.

According to an embodiment, the electronic device 101 may stop a movement of the area 530 in the second direction b in response to completion of the change in the size. For example, while the second housing 212 moves in a first direction a, the electronic device 101 may move the image in the second direction b and display the image in a predetermined partial area in the display area. For example, the predetermined partial area in the display area may include a center point of a first edge, from among the first edge and a second edge shorter than the first edge. The first edge may correspond to a relatively longer side of the display area. For example, the predetermined partial area may include a partial area including a center of the display area. For example, the electronic device 101 may display a center point of the visual object 510 identified in the image, in at least a partial area of the screen 310.

As described above, the electronic device 101 according to an embodiment may designate the area 530 including the plurality of objects 510 and 520 in the state of identifying the plurality of objects 510 and 520. The electronic device 101 may display the area 530 including the plurality of objects 510 and 520 in the screen 310 while the display area is reduced based on the movement of the second housing 212. The electronic device 101 may enhance a user experience of the electronic device 101 by displaying the area 530 including the plurality of objects 510 and 520 in the screen.

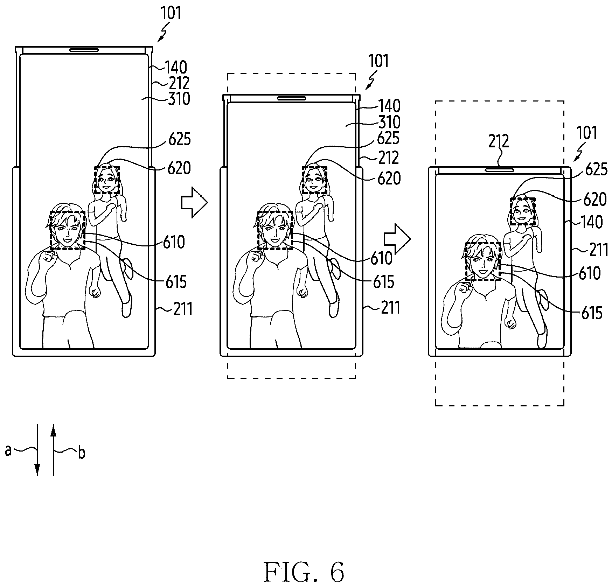

FIG. 6 illustrates an example of a screen according to a change in a display area of an electronic device according to an embodiment. An electronic device 101 of FIG. 6 may be an example of the electronic device 101 of FIG. 1, FIG. 2A, FIG. 2B, FIG. 3A, FIG. 3B, FIG. 3C, FIG. 3D, FIG. 4A, FIG. 4B, and/or FIG. 5. A display 140 of FIG. 6 may be an example of the display 140 of FIG. 1, FIG. 2A, FIG. 2B, FIG. 3A, FIG. 3B, FIG. 3C, FIG. 3D, FIG. 4A, FIG. 4B, and/or FIG. 5.

Referring to FIG. 6, the electronic device 101 according to an embodiment may identify a plurality of objects 610 and 620 included in content, based on identification of the content of a first attribute. The electronic device 101 may display an image in a display area having a first size. The electronic device 101 may identify the plurality of objects 610 and 620 included in the image in a state in which the image is displayed. The electronic device 101 may identify a plurality of areas 615 and 625 including each of the plurality of objects 610 and 620. The electronic device 101 may identify each of the plurality of areas 615 and 625 corresponding to each of the plurality of objects 610 and 620. For example, a first area 615 may correspond to a first object 610. For example, a second area 625 may correspond to a second object 620. The electronic device 101 may identify a wider area among the plurality of areas 615 and 625. For example, the electronic device 101 may identify the first area 615 wider than the second area 625. The number of the plurality of objects and/or the plurality of areas is not limited. For example, in a case of identifying three or more objects in the image, the electronic device 101 may identify areas corresponding to each of the plurality of objects. The electronic device 101 may identify an area having the largest size among the areas corresponding to each of the plurality of objects. While a second housing 212 moves in a first direction a, the electronic device 101 may maintain the display of the area having the largest size by moving the image in a second direction b.

The electronic device 101 according to an embodiment may receive an input for changing a size of the display area while the display area has the first size (e.g., the maximum size of the display area). The input may include a gesture of pressing a button 220 disposed on a surface of the second housing 212. In response to the input, the electronic device 101 may reduce the display area by moving the second housing 212. For example, in response to the input, the second housing 212 may move in the first direction a. The electronic device 101 may display the identified first area 615 in the screen while the display area is reduced. The electronic device 101 may move the image in the second direction b opposite to the first direction a while the second housing 212 moves in the first direction a. The electronic device 101 may maintain the display of the first area 615 including the first object 610 in the image, by moving the image in the second direction b.

As described above, the electronic device 101 according to an embodiment may identify the areas 615 and 625 corresponding to each of the plurality of objects 610 and 620, by identifying the plurality of objects 610 and 620. The electronic device 101 may identify a relatively wider area (e.g., the first area 615 of FIG. 6) among the areas 615 and 625. The electronic device 101 may reduce the display area of the display 140 by moving the second housing 212 in the first direction a. While the display area is reduced, the electronic device 101 may maintain the display of the area (e.g., the first area 615 of FIG. 6) identified as the relatively wider area, by moving the image in the second direction b. For example, the electronic device may maintain the display of the first area 615 identified wider than the second area 625. For example, the electronic device 101 may maintain the display of a plurality of visual objects identified in the display area, by moving the image displayed in the display area in a direction opposite to the direction in which the second housing 212 moves. The electronic device 101 may enhance a user experience of the electronic device 101 by maintaining the display of the area identified as the relatively wide area.

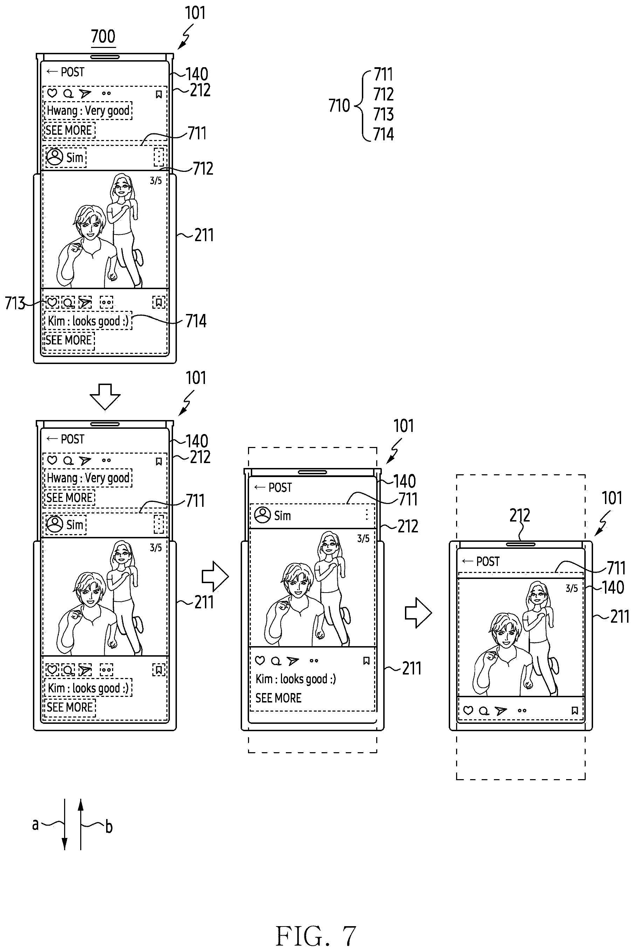

FIG. 7 illustrates an example of a screen according to a change in a display area of an electronic device according to an embodiment. An electronic device 101 of FIG. 7 may be an example of the electronic device 101 of FIG. 1, FIG. 2A, FIG. 2B, FIG. 3A, FIG. 3B, FIG. 3C, FIG. 3D, FIG. 4A, FIG. 4B, FIG. 5, and/or FIG. 6. A display 140 of FIG. 7 may be an example of the display 140 of FIG. 1, FIG. 2A, FIG. 2B, FIG. 3A, FIG. 3B, FIG. 3C, FIG. 3D, FIG. 4A, FIG. 4B, FIG. 5, and/or FIG. 6.

Referring to FIG. 7, the electronic device 101 according to an embodiment may identify an attribute of content displayed in the display area. For example, the electronic device 101 may classify content including a scroll view, such as a web page and/or an application related to multimedia, as a third attribute. The electronic device 101 may identify that a size of the display area is adjusted based on identification of the content of the third attribute. The electronic device 101 may include a scrollable area along a first direction a or a second direction b in a display area having a first size (e.g., the maximum size of the display area). For example, the scrollable area may be referred to as a scroll view area. In the scroll view area, the electronic device 101 may display at least one of repeated visual objects (e.g., containers). By using the scroll view area, the electronic device 101 may execute a function for reading the visual objects based on scrolling. For example, the scroll view area may include a text view area and/or an image view area. For example, the scroll view area may include a plurality of visual objects 710. For example, the plurality of visual objects 710 may include a visual object 714 indicating text, a visual object 712 indicating an image, and/or a visual object 713 for receiving an input. The visual object may include a combination of the above examples (e.g., the visual object indicating the text, the visual object indicating the image, and/or the visual object for receiving the input). The visual object in which the above examples are combined may be referred to as a visual object 711. However, it is not limited thereto.

Referring to FIG. 7, in a state 700, the electronic device 101 according to an embodiment may display an image and at least one of the plurality of visual objects 710 in the scrollable area in series along the first direction a. For example, the electronic device 101 may identify a visual object having the largest size among the plurality of visual objects 710. For example, in FIG. 7, the visual object having the largest size may be referred to as the visual object 711.

The electronic device 101 may receive an input for changing the size of the display area in a state of displaying the image and the at least one visual object in series. For example, the input may include a gesture of pressing a button 220 disposed outside of a second housing 212. The electronic device 101 may change the display area of the display 140 in response to receiving the input. For example, the electronic device 101 may reduce the display area by moving the second housing 212 in the first direction a, in response to receiving the input.

The electronic device 101 according to an embodiment may identify the image and at least one visual object 711 from among the plurality of visual objects 710 while the display area is reduced. The electronic device 101 may move the identified at least one visual object 711 in the second direction b while the display area is reduced. The electronic device 101 may maintain the display of the at least one visual object 711 by moving the at least one visual object 711 in the second direction b.

The electronic device 101 according to an embodiment may display a center of the at least one visual object 711 in a predetermined area in the display area when a size of the at least one visual object 711 is larger than the display area. For example, the center of the visual object 711 may be an intersection point between a straight line connecting a center point of relatively longer sides of the visual object 711 and a straight line connecting a center point of relatively shorter sides of the visual object 711. For example, the predetermined area in the display area may be an area including a straight line perpendicular to the center of a relatively longer first edge of the display area.

As described above, the electronic device 101 according to an embodiment may display a visual object (e.g., the visual object 711 of FIG. 7) having the largest size among a plurality of visual objects. The electronic device 101 may maintain the display of the visual object having the largest size while the display area is reduced by the movement of the second housing 212. The electronic device 101 may enhance a user experience of the electronic device 101 by maintaining displaying.

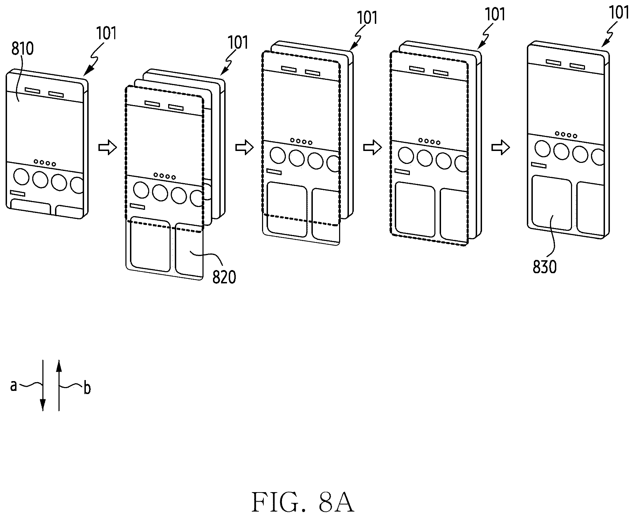

FIGS. 8A to 8B illustrate an example of a screen according to a change in a display area of an electronic device according to an embodiment. An electronic device 101 of FIGS. 8A to 8B may be an example of the electronic device 101 of FIG. 1, FIG. 2A, FIG. 2B, FIG. 3A, FIG. 3B, FIG. 3C, FIG. 3D, FIG. 4A, FIG. 4B, FIG. 5, FIG. 6, and/or FIG. 7.

Referring to FIG. 8A, the electronic device 101 according to an embodiment may identify content including a user interface having a different layout for each size of the display area. For example, the content including the user interface having the different layout for each size of the display area may be classified as content of a fourth attribute by the electronic device 101. The electronic device 101 may identify that a size of the display area is adjusted based on identification of the content of the fourth attribute. The electronic device 101 may be changed from a slide-in state to a slide-out state. The electronic device 101 may display a first screen 810 provided from an application while the display area exposed outside a first housing 211 has a first size in the slide-in state. The first size may be a size in which the display area has the maximum size in a state in which the second housing 212 is extracted.

The electronic device 101 according to an embodiment may receive an input indicating a change in size of the display area while the first screen 810 is displayed in the display area having the first size. For example, the input indicating the change in size of the display area may include at least one of a pinch-to-zoom gesture, a swipe gesture, a drag gesture, or a gesture of tapping a designated visual object (e.g., an icon in which an aspect ratio is displayed) displayed on a display 140. For example, the gesture may include a gesture of pressing a button 220 exposed to the outside from a portion of a housing 210 of the electronic device 101. For example, the input indicating the change in size of the display area may include an input indicating a change in size of the display area from the first size to a second size different from the first size. Referring to FIG. 8A, the input indicating the change in size of the display area may include an input of changing from the slide-in state to the slide-out state. For example, the size of the display area may change from the first size to the second size according to a movement of the second housing 212 in a first direction a based on the input. As the display area is changed from the first size to the second size, the user interface (UI) displayed in the display area may be changed. The electronic device 101 may obtain an image related to the changed UI displayed in the display area. The image related to the changed UI may correspond to an image 820 representing a second screen 830 to be described later.

In response to the input, the electronic device 101 according to an embodiment may obtain the image 820 representing the second screen 830 based on the second size, based on the application. The second size may include the maximum size of the display area. The second size may be the size of the display area in the slide-out state of the electronic device 101. The second screen 830 may include a screen in which the electronic device 101 displays in the slide-out state.

The electronic device 101 according to an embodiment may display at least a portion of the image 820 by overlapping on the first screen 810, while the size of the display area is changed from the first size to the second size according to the movement of the second housing 212 in the first direction a based on the input. The electronic device 101 may display the second screen 830 in the display area of the second size after the size of the display area is changed to the second size. Based on the change in size of the display area to the second size, the electronic device 101 may display the second screen 830 by fading-out the image 820. For example, the fade-out operation may be performed by adjusting an alpha value of the image 820. For example, the alpha value may mean transparency of the image 820. For example, the larger the alpha value, the clearer the image 820 may be displayed. For example, the smaller the alpha value, the more transparently the image 820 may be displayed in the screen. The electronic device 101 according to an embodiment may couple and display the image 820 based on the alpha value. For example, the electronic device 101 may adjust the transparency of the image 820 by adjusting the alpha value coupled to the image 820, while displaying the image 820.

As described above, the electronic device 101 according to an embodiment may display the image 820 obtained from the second screen 830 while the size of the display area is changed according to the movement of the second housing 212. The electronic device 101 may switch the image 820 to the second screen 830 by fading-out (or adjusting the alpha value), based on the completion of the change in size of the display area. The electronic device 101 may provide a smooth screen switch by fading-out and switching the image 820 to the second screen 830. The electronic device 101 may enhance a user experience of the electronic device 101 by smoothly switching the image 820 to the second screen 830.

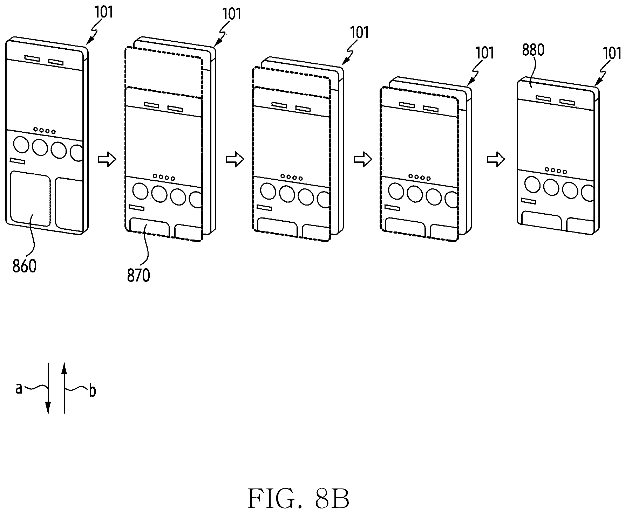

A first size of FIG. 8B to be described later may be a size different from the first size of FIG. 8A. A second size of FIG. 8B to be described later may be a size different from the second size of FIG. 8A. A first screen of FIG. 8B to be described later may be a screen different from the first screen of FIG. 8A. A second screen of FIG. 8B to be described later may be a screen different from the first screen of FIG. 8A. An image of FIG. 8B to be described later may be an image different from the image of FIG. 8A.

Referring to FIG. 8B, the electronic device 101 according to an embodiment may display a first screen 860 provided from an application while the display area has the first size. For example, the first size may be the maximum size of the display area in the slide-out state in which the second housing 212 of the electronic device 101 is extracted. The electronic device 101 may receive an input indicating a change to the second size different from the first size while displaying the first screen 860. For example, the second size may be the minimum size of the display area as the second housing 212 of the electronic device 101 moves in the first direction a.

The electronic device 101 according to an embodiment may receive an input indicating a change in size of the display area while the first screen 860 is displayed in the display area having the first size. For example, the electronic device 101 may receive an input indicating the change in size of the display area from the first size to the second size. The input may include a gesture of pressing the button 220 exposed to the outside of the electronic device 101.

The electronic device 101 according to an embodiment may obtain an image 870 representing a second screen 880 of the second size in response to receiving the input. The electronic device 101 may move the second housing 212 in the first direction a, based on the input indicating that the size of the display area is changed. The electronic device 101 may display at least a portion of the image 870 by overlapping on the first screen 860 while the size of the display area is changed from the first size to the second size according to the movement of the second housing 212.

While the size of the display area is changed to the second size according to the movement of the second housing 212 in the first direction a, the electronic device 101 according to an embodiment may move at least a portion of the first screen 860 and at least a portion of the second screen 880 in a second direction b opposite to the first direction a. The electronic device 101 may maintain the display of the at least a portion of the first screen 860 and/or the at least a portion of the second screen 880 by moving the at least a portion of the first screen 860 and/or the at least a portion of the second screen 880 in the second direction b.

The electronic device 101 according to an embodiment may identify that the size of the display area is changed to the second size. The electronic device 101 may display the second screen 880 in the display area of the second size based on the size of the display area being changed to the second size.

The electronic device 101 according to an embodiment may fade-out the at least a portion of the image 870 while changing from the at least a portion of the image 870 to the second screen 880. The electronic device 101 may display the second screen 880 in the display area by fading-out the at least a portion of the image 870.

As described above, the electronic device 101 according to an embodiment may receive the input indicating the change from the first size to the second size. In response to receiving the input, the electronic device 101 may obtain the image 870 of the second screen 880 indicating the second size. The electronic device 101 may display the image 870 by overlapping on the first screen 860 while changing from the first size to the second size. The electronic device 101 may change the image 870 displayed in the screen to the second screen 880, based on the change in size of the display area to the second size. When changing the image 870 to the second screen 880, the electronic device 101 may smoothly change the image 870 to the second screen 880 by fading-out the image 870. While changing from the first screen 860 to the second screen 880, the electronic device 101 may enhance the user experience of the electronic device 101, by displaying the image 870 overlapping on the first screen 860. The electronic device 101 may enhance the user experience of the electronic device 101 by fading-out the image 870 and smoothly changing the image 870 to the second screen 880.

FIG. 9 illustrates an example of a flowchart with respect to an operation of an electronic device according to an embodiment. The electronic device of FIG. 9 may be an example of the electronic device 101 of FIG. 1, FIG. 2A, FIG. 2B, FIG. 3A, FIG. 3B, FIG. 3C, FIG. 3D, FIG. 4A, FIG. 4B, FIG. 5, FIG. 6, FIG. 7, FIG. 8A and/or FIG. 8B. For example, at least one of operations of FIG. 9 may be performed by the electronic device 101 of FIG. 1 and/or the processor 120 of FIG. 1.

Referring to FIG. 9, in operation 901, the electronic device according to an embodiment may display an image while a display area, exposed outside a first housing (e.g., the first housing 211 of FIGS. 2A to 2B), has a first size. For example, the display area may be changed according to a movement of a second housing (e.g., the second housing 212 of FIGS. 2A to 2B) that is movable with respect to the first housing. For example, the first size may be the maximum size of the display area that the display area has, in a state (e.g., a slide-out state) in which the second housing is extracted.

The electronic device according to an embodiment may identify an object included in the image. For example, the object may be referred to as a subject. For example, the object may include a person, an animal, or a doll.

In operation 903, the electronic device according to an embodiment may receive an input indicating a change in size of the display area from the first size to a second size smaller than the first size while the image is displayed in the display area having the first size. For example, the second size smaller than the first size may be the minimum size of the display area that the display area has, in a state (e.g., a slide-in state) in which the second housing is inserted. For example, the display area being changed from the first size to the second size may be the display area being changed according to a movement of the second housing in a first direction (e.g., the first direction a of FIG. 3). For example, the input may include an input indicating the change in size of the display area. For example, the input indicating the change in the size of the display area may include a gesture of pressing a button (e.g., the button 220 of FIGS. 2A to 2B) exposed to the outside from a portion of a housing (e.g., the housing 210 of FIGS. 2A to 2B) of the electronic device.

In operation 905, the electronic device according to an embodiment may change the size of the display area from the first size to the second size in response to the input. In response to the input, the electronic device may change the second housing from the first size to the second size by moving the second housing in the first direction. While changing the display area to the second size, the electronic device may move a portion of the image identified from the image in a second direction (e.g., the second direction b of FIG. 3) opposite to the first direction. The portion of the image may include the object and/or the subject, included in the image. For example, the electronic device may maintain the display of the portion of the image in the display area by moving the image in the second direction.

As described above, the electronic device according to an embodiment may display the portion of the image in the display area while the display area is changed from the first size to the second size. The electronic device may enhance a user experience of the electronic device by maintaining the display of the portion of the image in the display area.

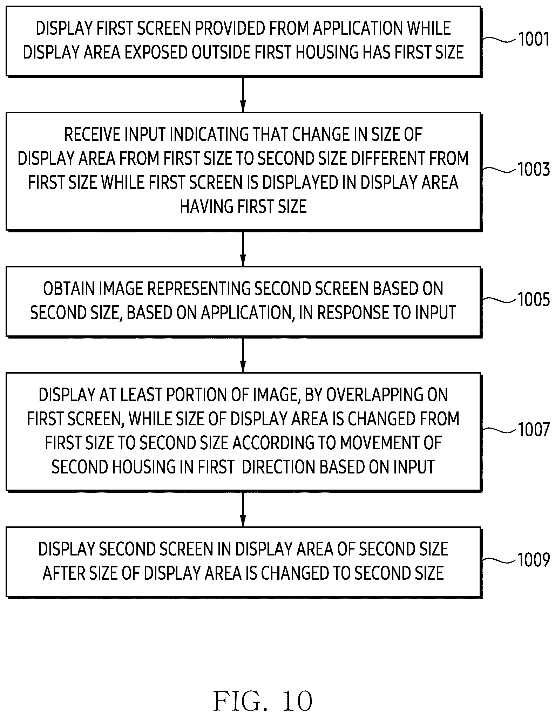

FIG. 10 illustrates an example of a flowchart with respect to an operation of an electronic device according to an embodiment. The electronic device of FIG. 10 may be an example of the electronic device 101 of FIGS. 1 to 8B and/or the electronic device of FIG. 9. At least one of operations of FIG. 10 may be performed by the electronic device 101 of FIG. 1 and/or the processor 120 of FIG. 1.

The electronic device according to an embodiment may include a first housing (e.g., the first housing 211 of FIGS. 2A to 2B). For example, the electronic device may change a size of a display area based on a second housing (e.g., the second housing 212 of FIGS. 2A to 2B) movable with respect to the first housing. For example, the electronic device may include a display including a display area that is extended or retracted according to a movement of the second housing. For example, the electronic device may include an actuator for the movement of the second housing.

Referring to FIG. 10, in operation 1001, the electronic device according to an embodiment may display a first screen provided from an application while the display area, exposed outside the first housing, has a first size. The first screen may be referred to as the first screen 810 of FIG. 8A and/or the first screen 860 of FIG. 8B. The first size may include the maximum size and/or the minimum size that the display area has according to the movement of the second housing.

In operation 1003, the electronic device according to an embodiment may receive an input indicating a change in size of the display area while the first screen is displayed in the display area having the first size. In response to receiving the input indicating the change in the size of the display area, the electronic device may change the size of the display area, by moving the second housing with respect to the first housing. For example, the electronic device may change the size of the display area from the first size to a second size different from the first size, in response to receiving the input. The second size may include the minimum size and/or the maximum size that the display area has according to the movement of the second housing. The input may include a gesture of pressing a button (e.g., the button 220 of FIGS. 2A to 2B) exposed to the outside of a housing (e.g., the housing 210 of FIGS. 2A to 2B) of the electronic device.

In operation 1005, the electronic device according to an embodiment may obtain an image (e.g., the image 820 of FIG. 8A and/or the image 870 of FIG. 8B) representing a second screen (the second screen 830 of FIG. 8A and/or the second screen 880 of FIG. 8B) based on the second size, based on the application, in response to the input. The image may include an image representing the second screen different from the first screen. The image may include an image representing a screen having the second size different from the first size.

In operation 1007, the electronic device according to an embodiment may display at least a portion of the obtained image while the size of the display area is changed. For example, the electronic device may display the at least a portion of the image by overlapping on the first screen, while changing from the first size to the second size according to the movement of the second housing in a first direction (e.g., the first direction a of FIG. 3) based on the input. While the second housing moves in the first direction, the electronic device according to an embodiment may display the at least a portion of the image in the display area, by moving the image in a second direction (e.g., the second direction b of FIG. 3) opposite to the first direction.

In operation 1009, the electronic device according to an embodiment may display the second screen in the display area of the second size after the size of the display area is changed to the second size. For example, the electronic device may identify completion of a change in the size of the display area from the first size to the second size. For example, the electronic device may fade-out the at least a portion of the image and change it to the second screen, based on the completion of the change in size of the display area to the second size.

As described above, the electronic device according to an embodiment may obtain an image representing the second screen of the second size, in response to receiving the input indicating the change in size of the display area. The electronic device may display the image in the screen by overlapping the first screen different from the second screen while changing the size of the display area. Based on the completion of the change in the size of the display area, the electronic device may stop the display of the image, and display the second screen. When stopping the display of the image, the electronic device may fade-out the image, and display the second screen. The electronic device may perform a switch to the second screen smoothly by fading-out the image. While changing from the first size to the second size, the electronic device may enhance a user experience of the electronic device, by overlapping and displaying the image on the first screen and then switching to the second screen.

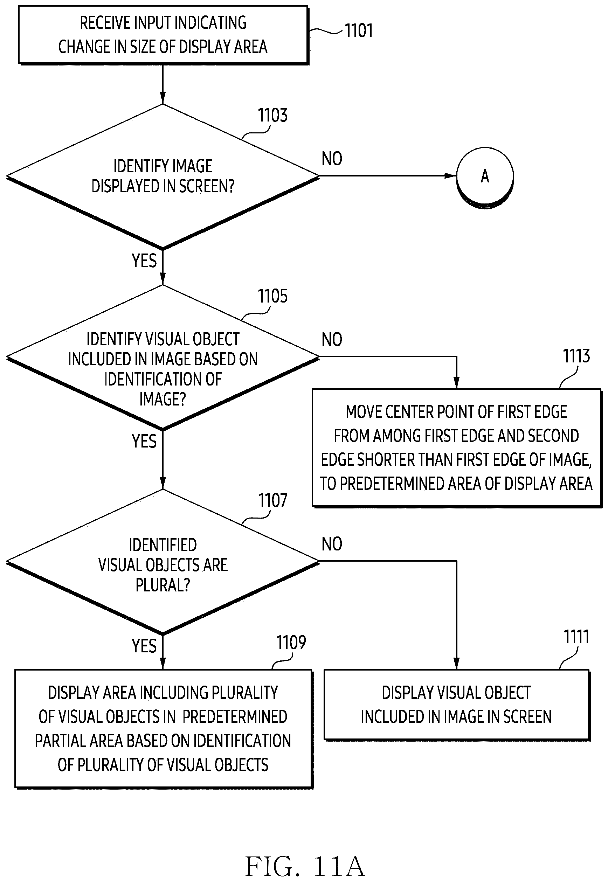

FIGS. 11A to 11B illustrate an example of a flowchart with respect to an operation of an electronic device according to an embodiment. The electronic device of FIGS. 11A to 11B may be an example of the electronic device 101 of FIGS. 1 to 8, and/or the electronic device of FIGS. 9 to 10. At least one of operations of FIGS. 11A to 11B may be performed by the electronic device 101 of FIG. 1 and/or the processor 120 of FIG. 1.

Referring to FIG. 11A, in operation 1101, the electronic device according to an embodiment may display a screen in a display area. The electronic device may receive an input indicating a change in size of the display area while displaying the screen in the display area. The input indicating the change in size of the display area may include a gesture of pressing a button (e.g., the button 220 of FIGS. 2A to 2B) exposed to the outside of a housing (e.g., the housing 210 of FIGS. 2A to 2B) included in the electronic device.

In operation 1103, according to an embodiment, the electronic device may identify an image displayed in the screen. For example, while displaying the screen through a display (e.g., the display 140 of FIG. 1), the electronic device may identify whether the image is being displayed in the screen.

In case that the image displayed in the screen is identified (1103-Yes), in operation 1105, the electronic device according to an embodiment may identify a visual object included in the image based on the identification of the image. For example, the visual object may be referred to as a subject. For example, the visual object may be referred to as a person, an animal, and/or a doll. For example, the visual object may include a visual object indicating text displayed in the screen of the electronic device, a visual object indicating an image, and/or a visual object for receiving an input.

The electronic device according to an embodiment may identify an area including the visual object, based on the identification of the visual object. For example, the area may include the visual object. For example, the area may be referred to as a figure such as a square. For example, the area may be configured as a closed curve as illustrated in the figure.

In case of not identifying the visual object included in the image (1105-No), in operation 1113, the electronic device according to an embodiment may move a center point of a first edge from among the first edge and a second edge shorter than the first edge of the image, to a predetermined area of the display area. For example, the electronic device may move a center of the image to a center of the display area, by moving the image. The electronic device may move the center point of the image to the predetermined area of the display area in a state different from a state in which the visual object in the image is identified. The predetermined area of the display area may include an intersection point between a straight line perpendicular to a center of a relatively longer side of the display area and a straight line perpendicular to a center of a relatively shorter side of the display area. As described above, the electronic device according to an embodiment may maintain the display by moving the image to the predetermined area. The electronic device may enhance a user experience of the electronic device by moving the image to the predetermined area and maintaining the display.

In case of identifying the visual object included in the image (1105-Yes), in operation 1107, the electronic device according to an embodiment may identify whether the identified visual objects are plural. For example, the electronic device may identify whether the area including the visual object are plural.

In case that the visual object included in the image is plural (1107-Yes), in operation 1109, the electronic device according to an embodiment may display an area including a plurality of visual objects in a predetermined partial area based on the identification of the plurality of visual objects. The electronic device according to an embodiment may designate the area including the plurality of visual objects. The electronic device may move the area including the plurality of visual objects in a second direction opposite to a first direction while the display area is reduced according to a movement of a second housing in the first direction. For example, the electronic device may maintain the display of the area including the plurality of visual objects, based on moving the area including the plurality of visual objects in the second direction.

In case that the visual object included in the image is not plural (1107-No), in operation 1111, the electronic device according to an embodiment may display the visual object included in the image in the screen. For example, the electronic device may move the visual object in the second direction while the display area is reduced according to the movement of the second housing in the first direction. The electronic device may maintain the display of the visual object by moving the visual object in the second direction.

The electronic device according to an embodiment may move the area including the visual object. For example, the electronic device may move the area including the visual object while the display area is reduced according to the movement of the second housing in the first direction. For example, the electronic device may move the area including the visual object to the predetermined area. The electronic device may maintain the display of the visual object in the display area by moving the visual object to the predetermined area.

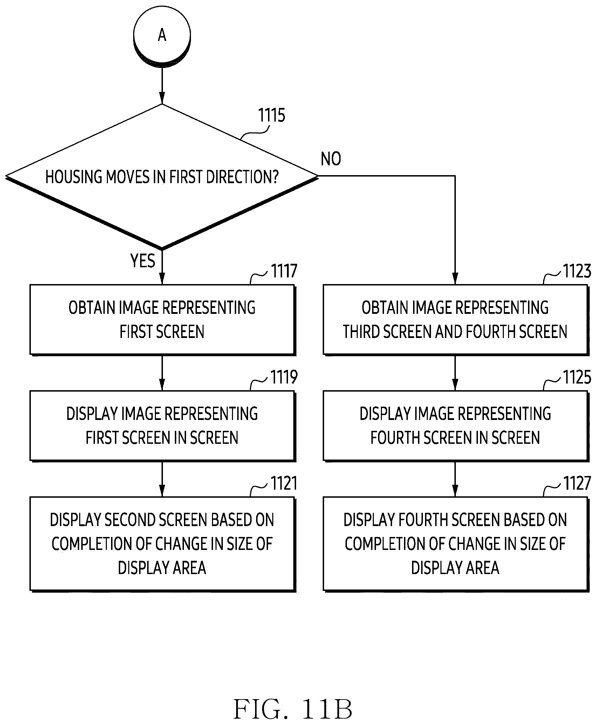

Referring to FIG. 11B, in case of not identifying the image in the screen (1103-No), in operation 1116, the electronic device according to an embodiment may identify whether the second housing movable with respect to a first housing moves in the first direction. For example, the first direction may be a direction facing the first housing from the second housing.

In case that the second housing moves in the first direction (1115-Yes), in operation 1117, the electronic device according to an embodiment may obtain an image representing a first screen. For example, the first screen of the electronic device may be a screen displayed in a state having a first size. The first size may include the maximum size of the display area capable of being formed according to the movement of the second housing.

In operation 1119, the electronic device according to an embodiment may display the obtained image representing the first screen in the screen. For example, the electronic device may display the image in the display area while moving the second housing in the first direction in response to receiving the input indicating the change in size of the display area. For example, the electronic device may display the image representing the first screen in the display area while reducing the size of the display area.

In operation 1121, the electronic device according to an embodiment may display a second screen based on completion of the change in size of the display area. For example, the electronic device may display the second screen in the display area after the change in the size of the display area is completed while displaying the image representing the first screen. The second screen may be a screen corresponding to a display area having a second size different from the first size. The second size may be the minimum size of the display area. The electronic device according to an embodiment may switch to the second screen by fading-out the image.

In case that the second housing does not move in the first direction (1115-No), in operation 1123, the electronic device according to an embodiment may obtain an image representing a third screen and a fourth screen. For example, the electronic device may obtain each of the image representing the third screen and the image representing the fourth screen while the second housing moves in the second direction (e.g., the second direction b of FIG. 3) different from the first direction. For example, the third screen may be a screen displayed in the display area in a state (e.g., a slide-in state) in which the housing is inserted. For example, the fourth screen may be a screen displayed in the display area in a state (e.g., a slide-out state) in which the housing is extracted.

In operation 1125, the electronic device according to an embodiment may display the image representing the fourth screen in the screen. For example, the electronic device may display the image representing the fourth screen by overlapping on the third screen, while the display area is extended as the second housing moves in the second direction.

In operation 1127, the electronic device according to an embodiment may display the fourth screen based on the completion of the change in size of the display area. For example, the electronic device may display the fourth screen based on the completion of the expansion of the display area. For example, the electronic device may display the fourth screen after the change of the display area is completed while displaying the image representing the third screen on the screen. The electronic device according to an embodiment may switch the image representing the third screen to the fourth screen. For example, when switching the image representing the third screen to the fourth screen, the electronic device may switch to the fourth screen by fading-out the image representing the third screen. As described above, the electronic device according to an embodiment may perform the switch to the fourth screen smoothly by fading-out the image representing the third screen. The electronic device may enhance a user experience of the electronic device by performing the switch to the fourth screen smoothly.

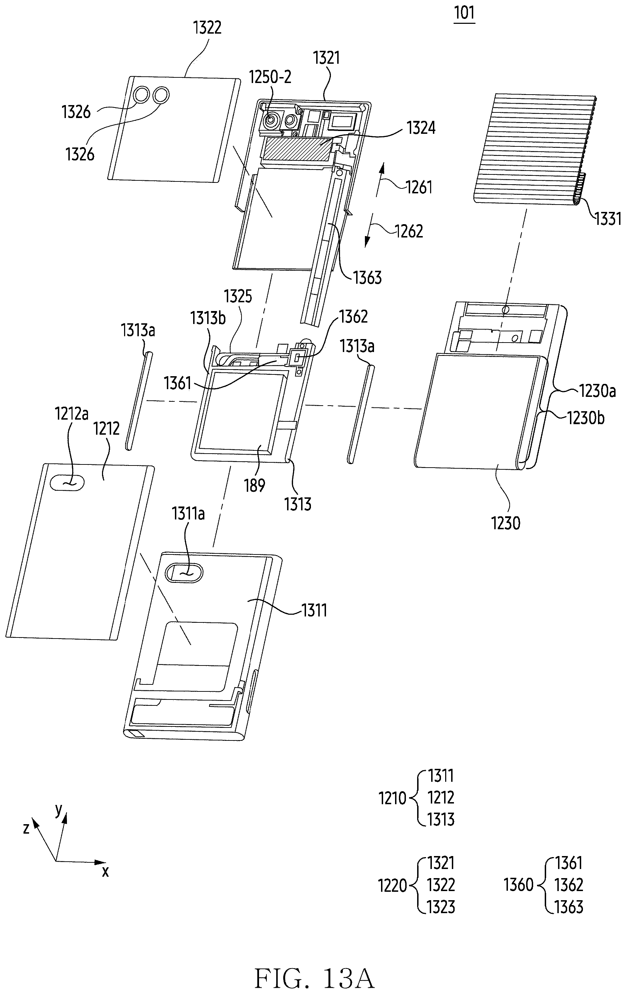

Hereinafter, an exemplary structure that an electronic device according to an embodiment has, in order to deform a display will be described with reference to FIGS. 12A to 12D and/or FIGS. 13A to 13B.

FIG. 12A illustrates an example of a top plan view of an electronic device according to an embodiment in a first state.

Referring to FIG. 12A, an electronic device 101 may include a first housing 1210, a second housing 1220 that is movable with respect to the first housing 1210 in a first direction 1261 parallel to a y-axis, or a second direction 1262 that is parallel to the y-axis and opposite to the first direction 1261, and a display 1230 (e.g., the display).

For example, the electronic device 101 may be in the first state. For example, in the first state, the second housing 1220 may be movable with respect to the first housing 1210 in the first direction 1261 from among the first direction 1261 and the second direction 1262. For example, in the first state, the second housing 1220 may not be movable with respect to the first housing 1210 in the second direction 1262.

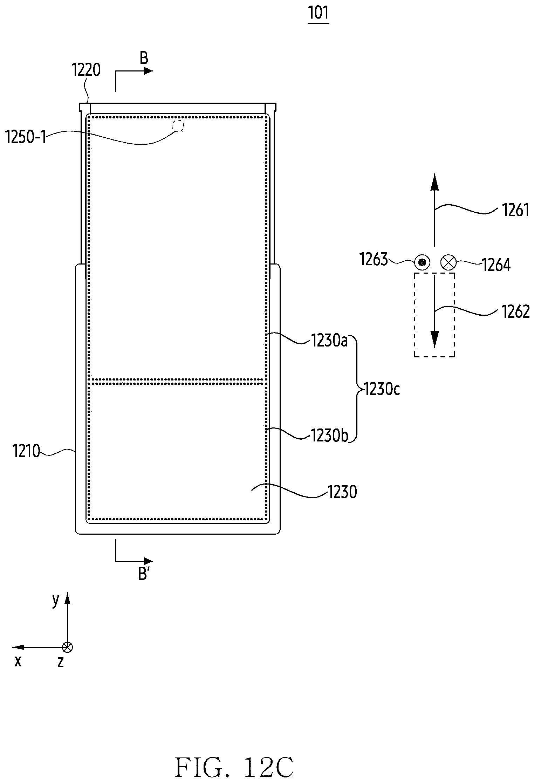

For example, in the first state, the display 1230 may provide a display area having the smallest size. For example, in the first state, the display area may correspond to an area 1230a. For example, although not illustrated in FIG. 12A, in the first state, an area (e.g., an area 1230b of FIG. 12C) of the display 1230 different from the area 1230a that is the display area may be included in the first housing 1210. For example, in the first state, the area may be covered by the first housing 1210. For example, in the first state, the area may be rolled into the first housing 1210. For example, in the first state, the area 1230a may include a planar portion, unlike the area including a curved portion. However, it is not limited thereto. For example, in the first state, the area 1230a may include the curved portion that is extended from the planar portion and is positioned in an edge portion.

For example, the first state may be referred to as a slide-in state or a closed state in terms of at least a portion of the second housing 1220 being positioned in the first housing 1210. For example, the first state may be referred to as a reduced state in terms of providing the display area having the smallest size. However, it is not limited thereto.

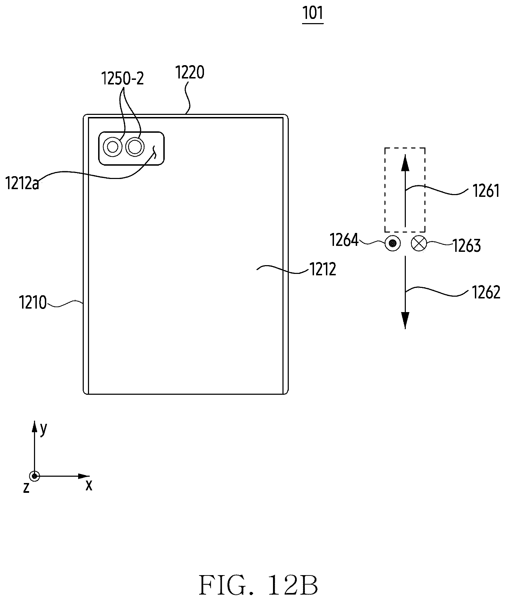

For example, the first housing 1210 may include a first image sensor 1250-1 in a camera module 180, exposed through a portion of the area 1230a and faces in a third direction 1263 parallel to a z-axis. For example, although not illustrated in FIG. 12A, the second housing 1220 may include one or more second image sensors in the camera module 180, exposed through a portion of the second housing 1220 and face in a fourth direction 1264 that is parallel to the z-axis and opposite to the third direction 1263. For example, the one or more second image sensors may be illustrated through the description of FIG. 12B.

FIG. 12B illustrates an example of a bottom view of an electronic device according to an embodiment in a first state.

Referring to FIG. 12B, in the first state, one or more second image sensors 1250-2 disposed in the second housing 1220 may be positioned within a structure disposed in the first housing 1210 for the one or more second image sensors 1250-2. For example, in the first state, light from the outside of the electronic device 101 may be received to the one or more second image sensors 1250-2 through the structure. For example, since the one or more second image sensors 1250-2 are positioned in the structure in the first state, the one or more second image sensors 1250-2 may be exposed through the structure in the first state. For example, the structure may be implemented in various ways. For example, the structure may be an opening or a notch. For example, the structure may be an opening 1212a in a plate 1212 of the first housing 1210 surrounding at least a portion of the second housing 1220. However, it is not limited thereto. For example, in the first state, the one or more second image sensors 1250-2 included in the second housing 1220 may be covered by the plate 1212 of the first housing 1210.

The first state may be changed to a second state. For example, the first state (or the second state) may be changed to the second state (or the first state) through one or more intermediate states between the first state and the second state.

For example, the first state (or the second state) may be changed to the second state (or the first state) based on a predefined user input. For example, the first state (or the second state) may be changed to the second state (or the first state) in response to a user input with respect to a physical button exposed through a portion of the first housing 1210 or a portion of the second housing 1220. For example, the first state (or the second state) may be changed to the second state (or the first state) in response to a touch input with respect to an executable object displayed in the display area. For example, the first state (or the second state) may be changed to the second state (or the first state) in response to a touch input which has a contact point on the display area and a pressing strength more than a reference strength. For example, the first state (or the second state) may be changed to the second state (or the first state) in response to a voice input received through a microphone of the electronic device 101. For example, in order to move the second housing 1220 with respect to the first housing 1210, the first state (or the second state) may be changed to the second state (or the first state) in response to an external force applied to the first housing 1210 and/or the second housing 1220. For example, the first state (or the second state) may be changed to the second state (or the first state) in response to a user input identified on an external electronic device (e.g., earbuds or smart watch) connected to the electronic device 101. However, it is not limited thereto.

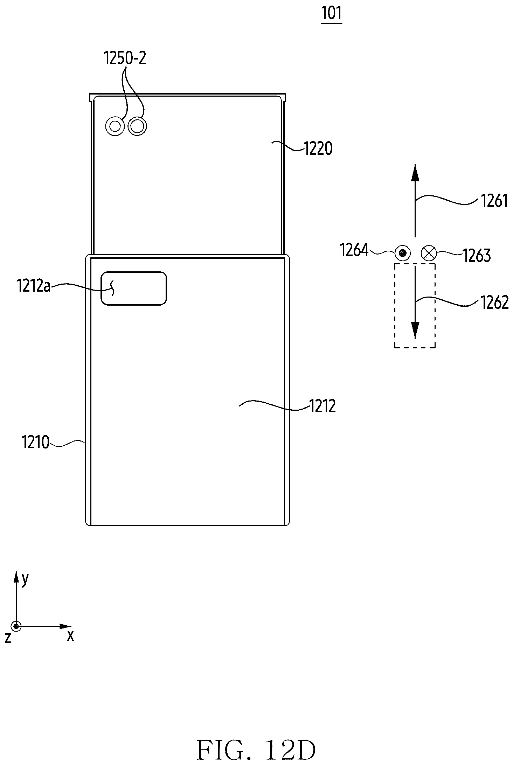

The second state may be illustrated through the description of FIGS. 12C and 12D.

FIG. 12C illustrates an example of a top plan view of an electronic device according to an embodiment in a second state.

Referring to FIG. 12C, the electronic device 101 may be in the second state. For example, in the second state, the second housing 1220 may be movable with respect to the first housing 1210 in the second direction 1262 from among the first direction 1261 and the second direction 1262. For example, in the second state, the second housing 1220 may not be movable in the first direction 1261 with respect to the first housing 1210.

For example, in the second state, the display 1230 may provide the display area having the largest size. For example, in the second state, the display area may correspond to an area 330c including the area 1230a and the area 1230b. For example, the area 1230b which was included in the first housing 1210 in the first state may be exposed in the second state. For example, in the second state, the area 1230a may include a planar portion. However, it is not limited thereto. For example, the area 1230a may include a curved portion that is extended from the planar portion and positioned in an edge portion. For example, in the second state, the area 1230b may include the planar portion from among the planar portion and the curved portion, unlike the area 1230a in the first state. However, it is not limited thereto. For example, the area 1230b may include the curved portion that is extended from the planar portion of the area 1230b and is positioned in the edge portion.

For example, the second state may be referred to as a slide-out state or an open state in terms of at least a portion of the second housing 1220 being positioned outside the first housing 1210. For example, the second state may be referred to as an extended state in terms of providing the display area having the largest size. However, it is not limited thereto.

For example, when a state of the electronic device 101 changes from the first state to the second state, the first image sensor 1250-1 facing the third direction 1263 may move along with the area 1230a according to the movement of the second housing 1220 in the first direction 1261. For example, although not illustrated in FIG. 512C, when the state of electronic device 101 changes from the first state to the second state, the one or more second image sensors 1250-2 facing the fourth direction 1264 may be moved according to the movement of the second housing 1220 in the first direction 1261. For example, a relative positional relationship between the one or more second image sensors 1250-2 and the structure illustrated through the description of FIG. 5B may be changed according to the movement of the one or more second image sensors 1250-2. For example, the change in the relative positional relationship may be illustrated through FIG. 12D.

FIG. 12D illustrates an example of a bottom view of an electronic device according to an embodiment in a second state.

Referring to FIG. 12D, in the second state, the one or more second image sensors 1250-2 may be positioned outside the structure. For example, in the second state, the one or more second image sensors 1250-2 may be positioned outside the opening 1212a in the plate 1212. For example, since the one or more second image sensors 1250-2 are positioned outside the opening 1212a in the second state, the one or more second image sensors 1250-2 may be exposed in the second state. For example, since the one or more second image sensors 1250-2 are positioned outside the structure in the second state, the relative positional relationship in the second state may be different from the relative positional relationship within the first state.

For example, in case that the electronic device 101 does not include the structure, such as the opening 1212a, the one or more second image sensors 1250-2 in the second state may be exposed, unlike the one or more second image sensors 1250-2 in the first state.

Although not illustrated in FIGS. 12A, 12B, 12C, and 12D, the electronic device 101 may be in an intermediate state between the first state and the second state. For example, the size of the display area in the intermediate state may be larger than the size of the display area in the first state, and smaller than the size of the display area in the second state. For example, the display area within the intermediate state may correspond to an area including the area 1230a and a portion of the area 1230b. For example, in the intermediate state, the portion of the area 1230b may be exposed, and another portion (or remaining portion) of the area 1230b may be covered by the first housing 1210 or rolled into the first housing 1210. However, it is not limited thereto.

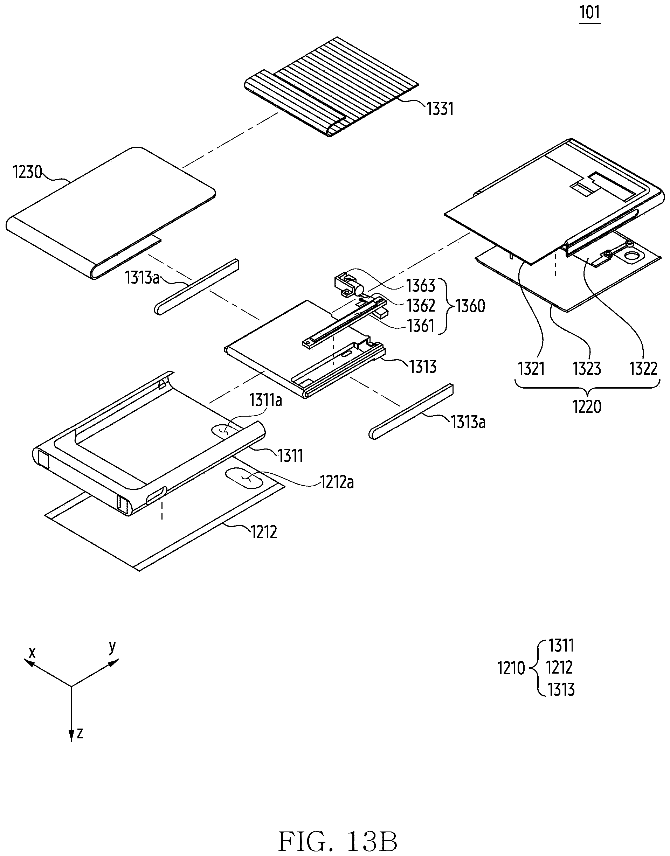

The electronic device 101 may include structures for moving the second housing (e.g., the second housing 1220 of FIG. 12) of the electronic device 101 with respect to the first housing (e.g., the first housing 1210 of FIG. 12) of the electronic device 101. For example, the structures may be illustrated through the description of FIGS. 13A and 13B.

FIGS. 13A and 13B illustrate an example of an exploded perspective view of an electronic device according to an embodiment.

Referring to FIGS. 13A and 13B, an electronic device 101 may include a first housing 1210, a second housing 1220, a display 1230, and a driving unit 1360.

For example, the first housing 1210 may include a book cover 1311, a plate 1212, and a frame cover 1313.

For example, the book cover 1311 may at least partially form a side portion of an outer surface of the electronic device 101. For example, the book cover 1311 may at least partially form a rear portion of the outer surface. For example, the book cover 1311 may include an opening 1311a for one or more second image sensors 1250-2. For example, the book cover 1311 may include a surface supporting the plate 1212. For example, the book cover 1311 may be coupled with the plate 1212. For example, the book cover 1311 may include the frame cover 1313. For example, the book cover 1311 may be coupled with the frame cover 1313.

For example, the plate 1212 may at least partially form a rear portion of the outer surface. For example, the plate 1212 may include an opening 1212a for the one or more second image sensors 1250-2. For example, the plate 1212 may be disposed on the surface of the book cover 1311. For example, the opening 1212a may be aligned with the opening 1311a.

For example, the frame cover 1313 may be at least partially surrounded by the book cover 1311.

For example, the frame cover 1313 may be at least partially surrounded by the display 1230. For example, the frame cover 1313 may be at least partially surrounded by the display 1230, but a position of the frame cover 1313 may be maintained independently of a movement of the display 1230. For example, the frame cover 1313 may be arranged in relation to at least a portion of components of the display 1230. For example, the frame cover 1313 may include rails 1313a that provide (or guide) a path of the movement of at least one component of the display 1230.

For example, the frame cover 1313 may be coupled with at least one component of the electronic device 101. For example, the frame cover 1313 may support a rechargeable battery 189. For example, the battery 189 may be supported through a recess or a hole in a surface 1313b of the frame cover 1313. For example, the frame cover 1313 may be coupled with an end of a flexible printed circuit board (FPCB) 1325 on a surface of the frame cover 1313. For example, although not explicitly illustrated in FIGS. 13A and 13B, another end of the FPCB 1325 may be connected to a PCB 1324 through at least one connector. For example, the PCB 1324 may be electrically connected to another PCB (not illustrated in FIGS. 13A and 13B) that supplies power to a motor 1361 through the FPCB 1325.

For example, the frame cover 1313 may be coupled with at least one structure of the electronic device 101 for a plurality of states including the first state and the second state. For example, the frame cover 1313 may fasten the motor 1361 of the driving unit 1360.

For example, the second housing 1220 may include a front cover 1321 and a slide cover 1322.

For example, the front cover 1321 may be at least partially surrounded by the display 1230. For example, unlike the frame cover 1313, the front cover 1321 may be coupled with at least a portion of an area 1230a of the display 1230 surrounding the front cover 1321, so that the display 1230 is moved along the second housing 1220 that moves with respect to the first housing 1210.

For example, the front cover 1321 may be coupled with at least one component of the electronic device 101. For example, the front cover 1321 may be coupled with the printed circuit board (PCB) 1324 including components of the electronic device 101. For example, the PCB 1324 may include a processor 120 (not illustrated in FIGS. 13A and 13B). For example, the front cover 1321 may include the one or more second image sensors 1250-2.

For example, the front cover 1321 may be coupled with at least one structure of the electronic device 101 for the plurality of states including the first state and the second state. For example, the front cover 1321 may fasten a rack gear 1363 of the driving unit 1360.

For example, the front cover 1321 may be coupled with the slide cover 1322.

For example, the slide cover 1322 may be coupled with the front cover 1321 to protect at least one component of the electronic device 101 coupled within the front cover 1321 and/or at least one structure of the electronic device 101 coupled within the front cover 1321. For example, the slide cover 1322 may include a structure for the at least one component. For example, the slide cover 1322 may include one or more openings 1326 for the one or more second image sensors 1250-2. For example, the one or more openings 1326 may be aligned with the one or more second image sensors 1250-2 disposed on the front cover 1321. For example, a size of each of the one or more openings 1326 may correspond to a size of each of the one or more second image sensors 1250-2.

For example, the display 1230 may include a support member 1331. For example, the support member 1331 may include a plurality of bars. For example, the plurality of bars may be coupled to each other.

For example, the driving unit 1360 may include the motor 1361, a pinion gear 1362, and the rack gear 1363.

For example, the motor 1361 may operate based on power from the battery 189. For example, the power may be provided to the motor 1361 in response to the predefined user input.

For example, the pinion gear 1362 may be coupled with the motor 1361 through a shaft. For example, the pinion gear 1362 may be rotated based on the operation of the motor 1361 transmitted through the shaft.

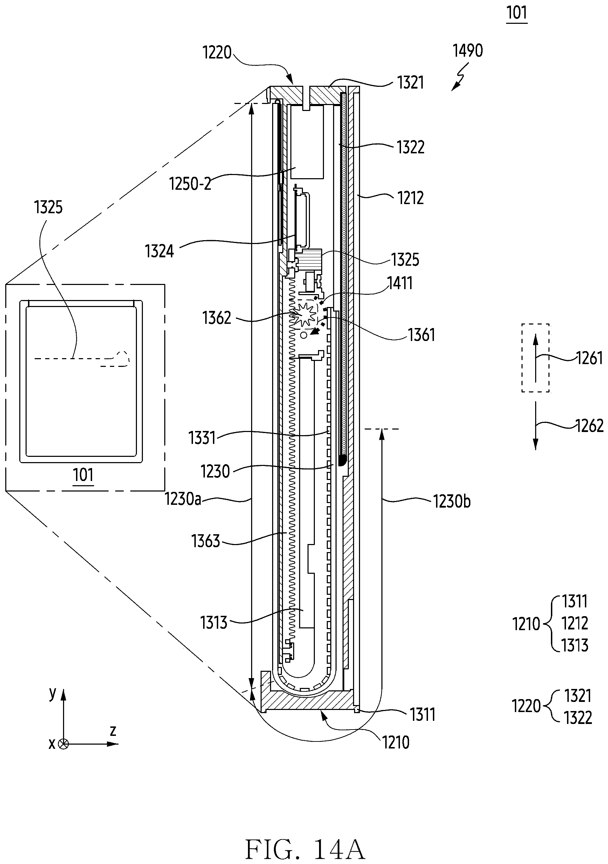

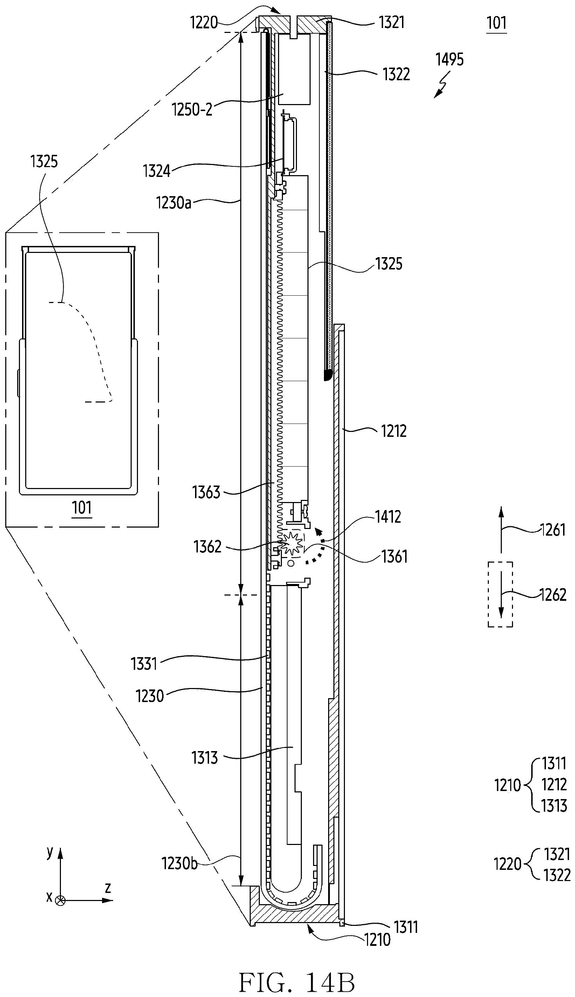

For example, the rack gear 1363 may be arranged in relation to the pinion gear 1362. For example, teeth of the rack gear 1363 may be engaged with teeth of the pinion gear 1362. For example, the rack gear 1363 may move in a first direction 1261 or a second direction 1262 according to rotation of the pinion gear 1362. For example, the second housing 1220 may be moved in the first direction 1261 and the second direction 1262 by the rack gear 1363 that moves according to the rotation of the pinion gear 1362 due to the operation of the motor 1361. For example, the first state of the electronic device 101 may be changed to a state (e.g., the one or more intermediate states or the second state) different from the first state through the movement of the second housing 1220 in the first direction 1261. For example, the second state of the electronic device 101 may be changed to a state (e.g., the one or more intermediate states or the first state) different from the second state through the movement of the second housing 1220 in the second direction 1262. For example, the change of the first state to the second state by the driving unit 1360 and the change of the second state to the first state by the driving unit 1360 may be illustrated through FIGS. 14A and 14B.

FIG. 14A illustrates an example of a cross-sectional view of an electronic device according to an embodiment in a first state. FIG. 14B illustrates an example of a cross-sectional view of an electronic device according to an embodiment in a second state.

Referring to FIGS. 14A and 14B, a motor 1361 may be operated, based at least in part on the predefined user input received in a state 1490 that is the first state. For example, a pinion gear 1362 may be rotated in a first rotation direction 1411, based at least in part on the operation of the motor 1361. For example, a rack gear 1363 may be moved in a first direction 1361, based at least in part on the rotation of the pinion gear 1362 in the first rotation direction 1411. For example, since a front cover 1321 in a second housing 1320 fastens the rack gear 1363, the second housing 1320 may be moved in the first direction 1261, based at least in part on the movement of the rack gear 1363 in the first direction 1361. For example, since the front cover 1321 in the second housing 1320 is coupled with at least a portion of an area 1230a of a display 1230 and fastens the rack gear 1363, the display 1230 may be moved, based at least in part on the movement of the rack gear 1363 in the first direction 1361. For example, the display 1230 may be moved along rails 1313a. For example, a shape of at least a portion of the plurality of bars of a support member 1331 of the display 1230 may change when the state 1490 changes to a state 1495 that is the second state.

For example, an area 1230b of the display 1230 may be moved according to the movement of the display 1230. For example, when the state 1490 changes to the state 1495 according to the predefined user input, the area 1230b may be moved through a space between a book cover 1311 and a frame cover 1313. For example, the area 1230b in the state 1495 may be exposed, unlike the area 1230b rolled into the space in the state 1490.

For example, since the front cover 1321 in the second housing 1320 is coupled with a PCB 1324 connected to the other end of an FPCB 1325, and fastens the rack gear 1363, a shape of the FPCB 1325 may be changed when the state 1490 changes to the state 1495.

The motor 1361 may be operated, based at least in part on the predefined user input received in the state 1495. For example, the pinion gear 1362 may be rotated in a second rotation direction 1412 based at least in part on the operation of the motor 1361. For example, the rack gear 1363 may be moved in the second direction 1362 based at least in part on the rotation of the pinion gear 1362 in the second rotation direction 1412. For example, since the front cover 1321 in the second housing 1320 fastens the rack gear 1363, the second housing 1320 may be moved in the second direction 1262 based at least in part on the movement of the rack gear 1363 in the second direction 1362. For example, since the front cover 1321 in the second housing 1320 is coupled with at least a portion of the area 1230a of the display 1230 and fastens the rack gear 1363, the display 1230 may be moved based at least in part on the movement of the rack gear 1363 in the second direction 1362. For example, the display 1230 may be moved along the rails 1313a. For example, the shape of at least a portion of the plurality of bars of the support member 1331 of the display 1230 may be changed when the state 1495 changes to the state 1490.

For example, the area 1230b of the display 1230 may be moved according to the movement of the display 1230. For example, when the state 1495 changes to the state 1490 according to the predefined user input, the area 1230b may be moved through the space between the book cover 1311 and the frame cover 1313. For example, the area 1230b in the state 1490 may be rolled into the space, unlike the area 1230b exposed in the state 1495.

For example, since the front cover 1321 in the second housing 1320 is coupled with the PCB 1324 connected to the other end of the FPCB 1325 and fastens the rack gear 1363, the shape of the FPCB 1325 may be changed when the state 1495 changes to the state 1490.

FIGS. 12A to 14B illustrate the electronic device 101 in which a height of the display area is changed, and a width of the display area is maintained, when the first state (or the second state) is changed to the second state (or the first state) in a portrait mode, but this is for convenience of explanation. For example, when the first state (or the second state) changes to the second state (or the first state) in the portrait mode, the electronic device 101 may be implemented such that the height of the display area is maintained and the width of the display area is changed.

As described above, an electronic device 101 may comprise a first housing 211, a second housing 212 movable with respect to the first housing 211, a display 140 including a display area that is extended or retracted according to a movement of the second housing 212, and a processor 120. The processor 120 may be configured to identify, while displaying a first portion of a content within the display area, that a size of the display area exposed outside of the first housing 211 is extended. The processor may be configured to, based on identifying that the size of the display area is extended, identify an attribute of the content displayed through the display area. The processor may be configured to display, based on the attribute, together with the first portion of the content, a second portion connected to the first portion within the content, in the display area having the extended size.

The processor according to an embodiment may be configured to identify the attribute, based on at least one of an image included in the content, text included in the content, a video included in the content, or a container included in the content.

The processor according to an embodiment may be configured to display, based on identifying that the first portion of an image included in the content is displayed through the display area based on the attribute, together with the first portion positioned at a center point of the display area having the extended size, the second portion of the image.

The processor according to an embodiment may be configured to identify a visual object within the image included in the content based on the attribute. The processor may be configured to maintain, based on identifying the visual object, displaying of the visual object within the display area.

The processor according to an embodiment may be configured to display the first portion including the container based on at least one container included in the content based on the attribute. The processor may be configured to display, in a state of fixing a position of the first portion within the display area, a second portion which is different from the first portion and connected to the first portion.

The processor according to an embodiment may be configured to identify, based on identifying an image based on the attribute, a plurality of visual objects included in the image. The processor may be configured to display, by matching to a center point of the display area, a center point of an area including the plurality of visual objects.

The processor according to an embodiment may be configured to display, based on the display area being extended, a first user interface of the content being displayed within the display area to a second user interface.

The processor according to an embodiment may be configured to change, based on adjusting of an alpha value of the display area when changing the first user interface of the content, the first user interface to the second user interface.

The processor according to an embodiment may be configured to display, in the second user interface, information different from information displayed within the first user interface.

The processor according to an embodiment may be configured to move and display, based on the movement of the second housing, the content, in correspondence with a direction to which the second housing moves.

As described above, a method of an electronic device according to an embodiment may comprise identifying, while displaying a first portion of a content within a display area, that a size of the display area exposed outside of a first housing is extended. The method of the electronic device may comprise, based on identifying that the display area is extended, identifying an attribute of the content displayed through the display area. The method of the electronic device may comprise displaying, based on the attribute, together with the first portion of the content, a second portion connected to the first portion within the content, in the display area having the extended size.

The method of the electronic device according to an embodiment may comprise identifying the attribute based on at least one of an image included in the content, text included in the content, a video included in the content, or a container included in the content.

The method of the electronic device according to an embodiment may comprise displaying, based on identifying that the first portion of an image included in the content is displayed through the display area based on the attribute, together with the first portion positioned at a center point of the display area having the extended size, the second portion of the image.

The method of the electronic device according to an embodiment may comprise identifying a visual object within the image included in the content based on the attribute. The method of the electronic device may comprise maintaining, based on identifying the visual object, displaying of the visual object within the display area.

The method of the electronic device according to an embodiment may comprise displaying the first portion including the container based on at least one container included in the content based on the attribute. The method of the electronic device may comprise displaying, in a state of fixing a position of the first portion within the display area, a second portion which is different from the first portion and connected to the first portion.

The method of the electronic device according to an embodiment may comprise identifying, based on identifying an image identified based on the attribute, a plurality of visual objects included in the image. The method of the electronic device may comprise displaying, by matching to a center point of the display area, a center point of an area including the plurality of visual objects.

The method of the electronic device according to an embodiment may displaying, based on the display area being extended, a first user interface of the content being displayed within the display area to a second user interface.

The method of the electronic device according to an embodiment may comprise changing, based on adjusting of an alpha value of the display area when changing the first user interface of the content, the first user interface to the second user interface.

The method of the electronic device according to an embodiment may comprise displaying, in the second user interface, information different from information displayed within the first user interface.

The method of the electronic device according to an embodiment may comprise moving and displaying, based on the movement of the second housing movable with respect to the first housing, the content, in correspondence with a direction to which the second housing moves.

As described above, an electronic device (e.g., the electronic device 101 of FIG. 1) according to an embodiment may include a first housing (e.g., the first housing 211 of FIGS. 2A to 2B), a second housing (e.g., the second housing 212 of FIGS. 2A to 2B) movable with respect to the first housing, and a display (e.g., the display 140 of FIG. 1) including a display area that is extended or retracted according to the movement of the second housing, and a processor (e.g., the processor 120 of FIG. 1). The processor 120 may be configured to identify, while displaying content in the display area, that a size of the display area exposed outside the first housing 211 is changed. The processor may be configured to, based on identifying a change in size of the display area, identify whether at least one image is displayed in the display area based on the content. The processor may be configured to move the at least one image in the display area based at least in part on whether the at least one image is included in the display area while the size of the display area is changed in a first state of identifying that the at least one image is displayed based on the content. The processor may be configured to move the content in the display area based on an edge of a portion of the content displayed in the display area while the size of the display area is changed in a second state different from the first state.

As described above, an electronic device (e.g., the electronic device 101 of FIG. 1) according to an embodiment may comprise a first housing (e.g., the first housing 211 of FIGS. 2A to 2B), a second housing (e.g., the second housing 212 of FIGS. 2A to 2B) movable with respect to the first housing, a display (e.g., the display 140 of FIG. 1) including a display area that is extended or retracted according to the movement of the second housing, an actuator (e.g., the actuator 150 of FIG. 1) for the movement of the second housing, and a processor (e.g., the processor 120 of FIG. 1). The processor may be configured to receive an input indicating a change of the display area to a second size different from a first size while the display area exposed outside the first housing has the first size. The processor may be configured to change the size of the display area by using the actuator based on the received input. The processor may be configured to, based on receiving the input based on a first screen including at least one image, move the at least one image based on a position in the display area of the at least one image, while the size of the display area is changed by the actuator. The processor may be configured to, while the size of the display area is changed by the actuator based on receiving the input based on a second screen different from the first screen, display a third screen that is obtained from an application corresponding to the second screen and has the second size, by overlapping on the second screen based on the first size.

The processor according to an embodiment may be configured to, while the size of the display area has the first size larger than the second size, move the image based on a visual object identified in the image while the size of the display area is changed based on receiving the input in a state of identifying the at least one image.

The processor according to an embodiment may be configured to, while the size of the display area is changed, based on receiving the input in a state including an area to scroll a plurality of images including the at least one image, maintain displaying of any one of the plurality of images based on scrolling of the area.

The processor according to an embodiment may be configured to, while changing the size of the display area, display the third screen, and a fourth screen displayed based on the first size, by combining based on an alpha value.

The processor according to an embodiment may be configured to maintain displaying of a plurality of visual objects in the display area, based on identifying the plurality of visual objects identified in the at least one image.

As described above, an electronic device (e.g., the electronic device 101 of FIG. 1) according to an embodiment may comprise a first housing (e.g., the first housing 211 of FIGS. 2A to 2B), a second housing (e.g., the second housing 212 of FIGS. 2A to 2B) movable with respect to the first housing, a display (e.g., the display 140 of FIG. 1) including a display area that is extended or retracted according to the movement of the second housing, an actuator (e.g., the actuator 150 of FIG. 1) for the movement of the second housing, and a processor (e.g., the processor 120 of FIG. 1). The processor may be configured to display an image while the display area exposed outside the first housing has a first size. The processor may be configured to receive an input indicating a change in size of the display area from the first size to a second size smaller than the first size, while the image is displayed in the display area having the first size. The processor may be configured to, while the size of the display area is changed from the first size to the second size according to a movement of the second housing in a first direction (e.g., the first direction a of FIG. 3) in response to the input, maintain displaying of a portion of the image, by moving the portion of the image identified from the image in a second direction (e.g., the second direction b of FIG. 3) opposite to the first direction.

The processor according to an embodiment may be configured to display the portion of the image in which the movement in the second direction is stopped in response to completion of the change in the size, in a predetermined partial area in the display area having the second size.

The predetermined portion in the display area according to an embodiment may include a center point of a first edge, from among the first edge of the display area and a second edge shorter than the first edge.

The processor according to an embodiment may be configured to, while the size is changed from the first size to the second size according to the movement of the second housing in the first direction in response to the input, maintain displaying of a third area (e.g., the area 530 of FIG. 5), by moving the third area including the portion of the image identified from the image that is a first area (e.g., the area 515 of FIG. 5) and a second area (e.g., the area 525 of FIG. 5) that is identified from the image and different from the first area, in the second direction opposite to the first direction.

The processor according to an embodiment may be configured to display the third area in which the movement in the second direction is stopped in response to the completion of the change in the size, in the predetermined partial area in the display area having the second size.

The processor according to an embodiment may be configured to, while the size is changed from the first size to the second size according to the movement of the second housing in the first direction in response to the input, maintain displaying of the first area from among the first area and the second area, by moving the first area in the second direction opposite to the first direction, based on identifying the first area larger than the second area, from among the portion of the image, which is the first area, and the second partial area, which is identified from the image and different from the first area.

The processor according to an embodiment may be configured to, in a state different from a state of identifying a portion of the image in which a subject is captured, while the size is changed from the first size to the second size according to the movement of the second housing in the first direction in response to the input, move the center point of the first edge from among the first edge of the image and the second edge shorter than the first edge, to the predetermined area of the display area.

The processor according to an embodiment may be configured to display the image and at least one visual object in series along the first direction, in a scrollable area along the first direction or the second direction, in the display area having the first size. The processor may be configured to move the image and the at least one visual object, displayed in series in the area, in the second direction, in response to the input.

The processor according to an embodiment may be configured to, based on identifying a plurality of visual objects, in the area of the display area, move the at least one visual object among the plurality of visual objects and the image, in the second direction.

The processor according to an embodiment may be configured to display the image and the at least one visual object in which the movement in the second direction is stopped in response to the completion of the change in the size, in the predetermined partial area in the display area having the second size.

As described above, an electronic device according to an embodiment may comprise a first housing (e.g., the first housing 211 of FIGS. 2A to 2B), a second housing (e.g., the second housing 212 of FIGS. 2A to 2B) movable with respect to the first housing, a display (e.g., the display 140 of FIG. 1) including a display area that is extended or extracted according to the movement of the second housing, an actuator (e.g., the actuator 150 of FIG. 1) for the movement of the second housing, and a processor (e.g., the processor 120 of FIG. 1). The processor may be configured to display a first screen provided from an application while a display area exposed outside the first housing has a first size. The processor may be configured to receive an input indicating a change in size of the display area from the first size to a second size different from the first size, while the first screen is displayed in the display area having the first size. The processor may be configured to obtain an image representing a second screen based on the second size, based on the application in response to the input. The processor may be configured to display at least a portion of the image by overlapping on the first screen while the size of the display area is changed from the first size to the second size according to the movement of the second housing in a first direction based on the input. The processor may be configured to display the second screen in the display area of the second size after the size of the display area is changed to the second size.

The processor according to an embodiment may be configured to, while the size is changed from the first size to the second size according to the movement of the second housing in the first direction in response to the input, maintain displaying of the portion, by moving the portion of the first screen and the portion of the second screen in a second direction opposite to the first direction.

The processor according to an embodiment may be configured to display the second screen in the display area by fading-out at least a portion of the image while switching from the at least a portion of the image to the second screen.

As described above, a method of an electronic device (e.g., the electronic device 101 of FIG. 1) according to an embodiment may comprise displaying an image while a display area exposed outside a first housing (e.g., the first housing 211 of FIGS. 2A to 2B) has a first size. The method of the electronic device may comprise receiving an input indicating a change in size of the display area from the first size to a second size smaller than the first size while the image is displayed in the display area having the first size. The method of the electronic device may comprise maintaining displaying a portion of the image, by moving the portion of the image identified from the image in a second direction (e.g., the second direction b of FIG. 3) opposite to the first direction, while the size of the display area is changed from the first size to the second size according to a movement of a second housing (e.g., the second housing 212 of FIGS. 2A to 2B) in a first direction (e.g., the first direction a of FIG. 3), in response to the input.

The method of the electronic device according to an embodiment may comprise displaying the portion of the image in which the movement in the second direction is stopped in response to completion of the change in the size, in a predetermined partial area in the display area having the second size.

The predetermined portion in the display area according to an embodiment may include a center point of a first edge, from among the first edge of the display area and a second edge shorter than the first edge.

The method of the electronic device according to an embodiment may comprise, while the size is changed from the first size to the second size according to the movement of the second housing in the first direction in response to the input, maintaining displaying of a third area, by moving the third area including the portion of the image identified from the image that is a first area and a second area that is identified from the image and different from the first area, in the second direction opposite to the first direction.

The method of the electronic device according to an embodiment may comprise displaying the third area in which the movement in the second direction is stopped in response to the completion of the change in the size, in the predetermined partial area in the display area having the second size.

The method of the electronic device according to an embodiment may comprise, while the size is changed from the first size to the second size according to the movement of the second housing in the first direction in response to the input, maintaining displaying of the first area from among the first area and the second area, by moving the first area in the second direction opposite to the first direction, based on identifying the first area larger than the second area, from among the portion of the image that is a first area, and the second partial area that is identified from the image and different from the first area.

The method of the electronic device according to an embodiment may comprise, in a state different from a state of identifying a portion of the image in which a subject is captured, while the size is changed from the first size to the second size according to the movement of the second housing in the first direction in response to the input, moving a center point of a first edge from among the first edge of the image and the second edge shorter than the first edge, to the predetermined area of the display area.

The method of the electronic device according to an embodiment may comprise displaying the image and at least one visual object in series along the first direction, in a scrollable area along the first direction or the second direction, in the display area having the first size. The method of the electronic device may comprise moving the image and the at least one visual object, displayed in series in the area, in the second direction, in response to the input.

The method of the electronic device according to an embodiment may comprise, based on identifying a plurality of visual objects, in the area of the display area, moving the at least one visual object among the plurality of visual objects and the image, in the second direction.

The method of the electronic device according to an embodiment may comprise displaying the image and the at least one visual object in which the movement in the second direction is stopped in response to the completion of the change in the size, in the predetermined partial area in the display area having the second size.

As described above, a method of an electronic device (e.g., the electronic device 101 of FIG. 1) according to an embodiment may comprise displaying a first screen provided from an application while a display area exposed outside a first housing (e.g., the first housing 211 of FIGS. 2A to 2B) has a first size. The method of the electronic device may comprise receiving an input indicating a change in size of the display area from the first size to a second size different from the first size while the first screen is displayed in the display area having the first size. The method of the electronic device may comprise obtaining an image representing a second screen based on the second size, based on the application in response to the input. The method of the electronic device may comprise displaying at least a portion of the image by overlapping on the first screen while the size of the display area is changed from the first size to the second size according to a movement of a second housing (e.g., the second housing 212 of FIGS. 2A to 2B) in a first direction (e.g., the first direction a of FIG. 3) based on the input. The method of the electronic device may comprise displaying the second screen in the display area of the second size after the size of the display area is changed to the second size.

The method of the electronic device according to an embodiment may comprise, while the size is changed from the first size to the second size according to the movement of the second housing in the first direction in response to the input, maintaining displaying of the portion, by moving the portion of the first screen and the portion of the second screen in a second direction opposite to the first direction.

The method of the electronic device according to an embodiment may comprise displaying the second screen in the display area by fading-out at least a portion of the image while switching from the at least a portion of the image to the second screen.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (211);
a second housing (212) movable with respect to the first housing (211);
a display (140) including a display area that is extended or retracted according to a movement of the second housing (212); and
a processor (120),
wherein the processor (120) is configured to:
identify, while displaying a first portion (320; 340; 360) of a content within the display area, that a size of the display area exposed outside of the first housing (211) is extended;
based on identifying that the size of the display area is extended, identify an attribute of the content displayed through the display area; and
display, based on the attribute, together with the first portion (320; 340; 360) of the content, a second portion (330; 350; 370) connected to the first portion (320; 340; 360) within the content, in the display area having the extended size.

2. The electronic device (101) of claim 1, wherein the processor (120) is configured to:
identify the attribute based on at least one of an image included in the content, text included in the content, a video included in the content, or a container included in the content.

3. The electronic device (101) of any one of claim 1 to claim 2, wherein the processor (120) is configured to:
display, based on identifying that the first portion (320; 340; 360) of an image included in the content is displayed through the display area based on the attribute, together with the first portion (320; 340; 360) positioned at a center point of the display area having the extended size, the second portion (330; 350; 370) of the image.

4. The electronic device (101) of claim 3, wherein the processor (120) is configured to:
identify a visual object within the image included in the content based on the attribute; and
maintain, based on identifying the visual object, displaying of the visual object within the display area.

5. The electronic device (101) of any one of claim 1 to claim 4, wherein the processor (120) is configured to:
display the first portion (320; 340; 360) including the container based on at least one container included in the content based on the attribute; and
display, in a state of fixing a position of the first portion (320; 340; 360) within the display area, a second portion (330; 350; 370) which is different from the first portion (320; 340; 360) and connected to the first portion (320; 340; 360).

6. The electronic device (101) of any one of claim 1 to claim 5, wherein the processor (120) is configured to:
identify, based on identifying an image identified based on the attribute, a plurality of visual objects included in the image; and
display, by matching to a center point of the display area, a center point of an area including the plurality of visual objects.

7. The electronic device (101) of any one of claim 1 to claim 6, wherein the processor (120) is configured to:
display, based on the display area being extended, a first user interface of the content being displayed within the display area by changing to a second user interface.

8. The electronic device (101) of claim 7, wherein the processor (120) is configured to:
change, based on adjusting of an alpha value of the display area when changing the first user interface of the content, the first user interface to the second user interface.

9. The electronic device (101) of claim 7, wherein the processor (120) is configured to:
display, in the second user interface, information different from information displayed within the first user interface.

10. The electronic device (101) of any one of claim 1 to claim 9, wherein the processor (120) is configured to:
move and display, based on the movement of the second housing (212), the content, in correspondence with a direction to which the second housing (212) moves.

11. A method of an electronic device (101), comprising:
identifying, while displaying a first portion (320; 340; 360) of a content within a display area, that a size of the display area exposed outside of a first housing (211) is extended;
based on identifying that the size of the display area is extended, identifying an attribute of the content displayed through the display area; and
displaying, based on the attribute, together with the first portion (320; 340; 360) of the content, a second portion (330; 350; 370) connected to the first portion (320; 340; 360) within the content, in the display area having the extended size.

12. The method of claim 11, wherein the method of the electronic device (101) comprising:
identifying the attribute based on at least one of an image included in the content, text included in the content, a video included in the content, or a container included in the content.

13. The method of any one of claim 11 to claim 12, wherein the method of the electronic device (101) comprising:
displaying, based on identifying that the first portion (320; 340; 360) of an image included in the content is displayed through the display area based on the attribute, together with the first portion (320; 340; 360) positioned at a center point of the display area having the extended size, the second portion (330; 350; 370) of the image.

14. The method of claim 13, wherein the method of the electronic device (101) comprising:
identifying a visual object within the image included in the content based on the attribute; and
maintaining, based on identifying the visual object, displaying of the visual object within the display area.

15. The method of any one of claim 11 to claim 14, wherein the method of the electronic device (101) comprising:
displaying the first portion including the container based on at least one container included in the content based on the attribute; and
displaying, in a state of fixing a position of the first portion (320; 340; 360) within the display area, a second portion (330; 350; 370) which is different from the first portion (320; 340; 360) and connected to the first portion (320; 340; 360).
